# EUROPÄISCHE PATENTSCHRIFT

(11) **EP 2 874 789 B1**
(45) Veröffentlichungstag und Bekanntmachung des Hinweises auf die Patenterteilung: **01.02.2017**
(21) Anmeldenummer: 13737598.6
(22) Anmeldetag: 16.07.2013
(51) Int. Cl.: B25J 13/06

(54) **VERFAHREN ZUR BEDIENUNG EINES INDUSTRIEROBOTERS SOWIE VORRICHTUNG ZUR DURCHFÜHRUNG DES VERFAHRENS**
METHOD FOR OPERATING AN INDUSTRIAL ROBOT, AND DEVICE FOR CARRYING OUT SAID METHOD
PROCÉDÉ DE COMMANDE D'UN ROBOT INDUSTRIEL ET DISPOSITIF PERMETTANT DE METTRE EN OEUVRE LE PROCÉDÉ

(30) Priorität: 17.07.2012 DE 102012106448
(43) Veröffentlichungstag der Anmeldung: 27.05.2015
(73) Patentinhaber: Reis Group Holding GmbH & Co. KG, 63785 Obernburg (DE)
(72) Erfinder: SOM, Franz, 64750 Lützelbach (DE)
(74) Vertreter: Stoffregen, Hans-Herbert
(86) Internationale Anmeldenummer: PCT/EP2013/064979
(87) Internationale Veröffentlichungsnummer: WO 2014/012919

(56) Entgegenhaltungen:
- DE-A1-102007 018 607
- DE-A1-102010 025 781
- US-A- 5 465 215
- US-A- 5 937 143

## Beschreibung

Die Erfindung bezieht sich auf ein Verfahren zur Bedienung eines mit einer Robotersteuerung verbundenen Industrieroboters mittels eines ein grafisches Bediener-Interface, wie Touch-Display aufweisenden Bediengerätes. Ferner bezieht sich die Erfindung auf eine Vorrichtung, die ein sicheres Überwachungsgerät zur Freigabe und Überwachung einer von einem Industrieroboter auszuführende Funktion, eine den Industrieroboter steuernde Steuereinrichtung und ein Bediengerät zur Anforderung der auszuführenden Funktion umfasst, wobei das sichere Überwachungsgerät mit der Steuereinrichtung und dem Bediengerät zum Austausch von Daten gekoppelt ist.

Eine Vorrichtung zum Steuern eines Industrieroboters in Form eines Handbediengerätes ist in der DE 10 2010 039 540 A1 beschrieben. Das Handbediengerät kann mit einer Robotersteuerung gekoppelt werden, um den Industrieroboter zu programmieren bzw. zu steuern.

Das Handbediengerät umfasst eine Elektronik, die einen Mikroprozessor umfasst, um mit der Robotersteuerung kommunizieren zu können. Ferner umfasst das Handbediengerät eine als Touchscreen ausgebildete Anzeige, eine Not-Aus-Taste und einen als Schloss ausgebildeten Umschalter. Zur manuellen Bewegung z. B. eines Roboterarms umfasst das Handbediengerät verschiedene, voneinander unabhängig manuell betätigbare Eingabemittel bzw. Verfahrmittel, die z. B. als 6D-Maus oder als Tipp-Tasten ausgebildet sind. Mittels des Touchscreens besteht die Möglichkeit, jedem der Verfahrmittel sein eigenes Bezugskoordinatensystem zuzuordnen.

Bei der bekannten Ausführungsform erfolgt die Steuerung des Industrieroboters jedoch ausschließlich über die manuell betätigbaren Eingabemittel, so dass das Handbediengerät in seiner Herstellung aufwändig und im Betrieb anfällig ist.

Eine weitere Vorrichtung zur Bedienung eines Industrieroboters ist in der DE 10 2010 025 781 A1 beschrieben. Das Handgerät in Form eines mobilen Telefons weist einen Touchscreen auf, der einerseits als Ausgabemittel zum Ausgeben von Informationen von der Robotersteuerung, insbesondere zur Darstellung einer Bedienoberfläche, und andererseits als Befehlseingabemittel zum Eingeben von Steuerbefehlen mittels Tasten dient.

Das Handgerät ist mittels einer Klemmeinrichtung, wie sie im Prinzip beispielsweise von Halterungen für mobile Telefone in Kraftfahrzeugen bekannt ist, lösbar an einer tragbaren Sicherheitseinrichtung befestigt und mit dieser über eine USB-Schnittstelle verbunden. Die Sicherheitseingabeeinrichtung weist einen Not-Halt-Knopf, einen Zustimm-Taster sowie einen Betriebsarten-Wahlschalter auf. Nachteilig bei dieser Ausführungsform ist, dass eine Bedienperson zur sicheren Bedienung der virtuellen Tasten stets gezwungen ist, auf den Touchscreen zu blicken, um Fehleingaben zu vermeiden. Gleiches gilt bei widrigen Umgebungsbedingungen wie beispielsweise starkem Lichteinfall oder Dunkelheit, die eine Bedienung des Touchscreens erschweren würden.

Aus der DE 10 2005 040 714 A1 ist ein Verfahren und ein System zur Erstellung eines Bewegungsablaufes für einen Roboter beschrieben. Das System umfasst eine Robotersteuerung, die mit einer externen Anordnung verbindbar ist, wobei die externe Anordnung eine Funktionseinheit aufweist, die als so genannter Graphical Teach Pendant Unit (GTPU) ausgebildet ist. Die Funktionseinheit weist einen Bildschirm auf, auf dem Bilder eines realen Arbeitsbereichs eines Roboters nebeneinander angezeigt werden können, die mit an einem Handgelenk des Roboters befestigten Bilderfassungseinrichtungen aus unterschiedlichen Perspektiven aufgenommen wurden. An der Funktionseinheit ist ferner ein Betätigungselement in Form einer Taste vorgesehen. Es ist vorgesehen, dass mit Hilfe einer Festlegungseinrichtung eine Startstellung des Roboters festgelegt wird. Sodann wählt die Bedienperson eine Soll-Endstellung mit Hilfe der Funktionseinheit bzw. der GTPU aus, indem die Bedienperson mit einem dafür vorgesehenen Stift des GTPU einen entsprechenden Punkt auf dem auf der Funktionseinheit angezeigten Bild berührt. Insbesondere berührt die Bedienperson jeweils einen Punkt im Bereich einer auf den Bildern dargestellten Fuge auf beiden Bildern. Die in den Bildern gewählte Soll-Endstellung wird mit Hilfe eines Kreuzes auf dem Bildschirm der Funktionseinheit angezeigt, so dass die Bedienperson eine visuelle Rückmeldung hat. Ist die Bedienperson mit der Wahl einverstanden, so muss sie dies durch Drücken des Betätigungselementes bestätigen, bevor mit dem nächsten Verfahrschritt fortgefahren wird. Eine sichere Kommunikation zwischen der Funktionseinheit und der Robotersteuerung ist in der DE 10 2005 040 714 A1 nicht beschrieben.

Davon ausgehend liegt der vorliegenden Erfindung die Aufgabe zugrunde, ein Verfahren und eine Vorrichtung der eingangs genannten Art derart weiterzubilden, dass die Bedienung eines Industrieroboters vereinfacht und die Sicherheit bei der Bedienung erhöht wird.

Die Aufgabe wird u. a. durch ein Verfahren mit folgenden Verfahrensschritten gelöst:
- Anfordern einer gewünschten Funktion oder Betriebsart des Industrieroboters durch eine Betätigungs-Eingabe zumindest eines vorzugsweise virtuellen Bedienelementes durch einen Bediener,
- Erfassen der Betätigungs-Eingabe des zumindest einen vorzugsweise virtuellen Bedienelementes, Übertragung der Betätigungs-Eingabe an ein sicheres Überwachungsgerät zur Freigabe und/oder Überwachung der von dem Industrieroboter auszuführenden Funktion oder Betriebsart,
- Identifizieren einer der angeforderten Funktion oder Betriebsart zugeordneten grafischen Information in dem sicheren Überwachungsgerät,
- Codieren der grafischen Information mittels einer einen Zufallsgenerator aufweisenden Codiereinrichtung, wie Platzierung an einer zufälligen Position in einem größeren Bild, und Übertragen der codierten grafischen Information von dem sicheren Überwachungsgerät an das Bediengerät und Anzeige der codierten grafischen Information auf dem grafischen Bediener-Interface,
- Erfassen einer Bestätigungs-Eingabe des Bedieners, durch die die Richtigkeit der angezeigten codierten grafischen Information bestätigt wird,
- Rücksenden der Bestätigungs-Eingabe von dem Bediengerät an das sichere Überwachungsgerät und Vergleich der empfangenen Bestätigungs-Eingabe mit der übertragenen codierten grafischen Information, und
- Ausführen der angeforderten Funktion oder Betriebsart bei Übereinstimmung der Bestätigungs-Eingabe mit der übertragenen codierten grafischen Information insbesondere durch die Robotersteuerung.

Durch das erfindungsgemäße Verfahren wird die Möglichkeit eröffnet, einen Industrieroboter oder eine andere technische Anlage mit erhöhten Sicherheitsanforderungen mit einem Bediengerät zu steuern, welches keine elektrischen Bedienelemente aufweist, sondern ausschließlich über ein Display oder Touch-Display bedient wird.

In Bezug auf die codierte grafische Information ist anzumerken, dass diese auch alphanumerisch sein kann. Codieren schließt auch eine einfache Änderung der grafischen Information ein. Grafische Information ist allgemein zu verstehen und schließt ein einfaches Symbol ein.

Zu dem Touch-Display ist anzumerken, dass es sich dabei vorzugsweise um einen marktüblichen Touchscreen mit glatter Oberfläche handelt, der vorzugsweise als kapazitiver Touchscreen ausgebildet ist, gleichwenn auch ein resistiver Touchscreen in Frage kommt.

Durch das Bediengerät können auch sicherheitsrelevante Funktionen ausgelöst werden, wie z. B. die Wahl der Betriebsart, für die üblicherweise ein hardwaremäßiger Schlüsselschalter erforderlich ist. Da das Bediengerät mit grafischem Bediener-Interface nur einkanalig in Software und Hardware aufgebaut ist, gilt dieses als unsicheres Gerät im Sinne der Sicherheitsnormen. Durch das erfindungsgemäße Verfahren können jedoch Funktionen sicher ausgelöst werden.

Dabei geht die Wirkrichtung von dem Bediener aus über das Bediengerät zu dem sicheren Überwachungsgerät, dann zurück zum Bediener und danach wieder zum sicheren Überwachungsgerät, welches letztendlich die sichere Funktionsauslösung ausführt. Durch den über das sichere Überwachungsgerät geschlossenen Wirkkreis wird eine sichere Funktionsauslösung ermöglicht. Mit dem erfindungsgemäßen Verfahren ist es möglich, beliebige Funktionen sicher auszulösen, d. h., das Verfahren ist nicht auf Betriebsartenwahl beschränkt.

Folglich ermöglicht das erfindungsgemäße Verfahren das Auslösen einer sicherheitsgerichteten Funktion mittels eines unsicheren Bediengeräts in Verbindung mit einem sicheren Überwachungsgerät.

Bei dem Verfahren kommen vier Verfahrensschritte zur Anwendung:
- Schritt 1:: Anforderung einer Funktion durch den Bediener. Der Bediener fordert auf einem als unsicher geltenden Gerät die Ausführung einer sicherheitsgerichteten Funktion an. Diese Anforderung wird an das sichere Überwachungsgerät geleitet.
- Schritt 2:: Rückmeldung an den Bediener. Das sichere Überwachungsgerät meldet dem Bediener die getroffene Funktionsanwahl auf dem Bediengerät zurück.
- Schritt 3:: Bestätigung durch den Bediener. Der Bediener bestätigt dem sicheren Überwachungsgerät die Richtigkeit der getätigten Funktionsanwahl.
- Schritt 4:: Ausführen der Funktion. Nach der Bestätigung und einem Vergleich, vorzugsweise in Form einer Plausibilitätsüberprüfung, führt das sichere Überwachungsgerät die Funktion aus.

Gemäß einer bevorzugten Verfahrensweise ist vorgesehen, dass das zumindest eine Bedienelement als virtuelles Bedienelement auf einem Display des grafischen Bediener-Interfaces visuell dargestellt wird und dass bei Betätigung des virtuellen Bedienelementes eine Position des virtuellen Bedienelementes auf dem Display in Form einer X'-, Y'-Koordinate erfasst wird.

Die X'-, Y'-Koordinate kann an das sichere Überwachungsgerät gesendet und in diesem ausgewertet werden.

Alternativ besteht die Möglichkeit, dass die X'-, Y'-Koordinate in dem Bediengerät ausgewertet wird, wobei eine der X'-, Y'-Koordinate entsprechende Funktion oder Betriebsart identifiziert wird, und dass eine Funktionskennung wie Funktionsname oder Funktionsnummer an das sichere Überwachungsgerät gesendet wird.

Auf dem Display eines Bediengerätes wird mindestens ein virtuelles Bedienelement visuell dargestellt. Dieses Bedienelement steht stellvertretend für eine auszulösende Sicherheitsfunktion. Das Bedienelement kann mittels einer Auswahleinrichtung selektiert werden, um so eine damit verknüpfte Sicherheitsfunktion auszuwählen. Eine mögliche Auswahleinrichtung kann z. B. eine Zeiger-Steuereinrichtung wie PC-Maus oder ein Finger sein, der ein Touch-Display berührt.

Eine Auswahlposition entweder Click-Position der Zeigersteuerung oder Tipp-Position des Fingers auf dem Touch-Display wird in Form von X'-/Y'-Koordinaten an das sichere Überwachungsgerät gesendet, welches dies als Anforderung versteht, eine sichere Funktion auszuführen. Das sichere Überwachungsgerät erkennt aufgrund einer zuvor getroffenen Zuweisung, welche Sicherheitsfunktion den jeweiligen X'-/Y'-Koordinaten zugeordnet ist und kann so die von dem Bediener angeforderte Funktion eindeutig identifizieren.

Hierzu ist vorgesehen, dass in einem sicheren Speicher des sicheren Überwachungsgeräts für jede Funktion oder Betriebsart ein entsprechendes Funktions-Ikon gespeichert ist, dass jedem Funktions-Ikon eine X'-,Y'-Koordinate oder eine Funktionskennung zugeordnet ist, dass das Funktions-Ikon über die von dem Bediengerät empfangenen X'-, Y'-Koordinaten oder über das Signal des Signalgebers identifiziert wird und dass das Funktions-Ikon von dem sicheren Überwachungsgerät an das Bediengerät übertragen und auf dem grafischen Bediener-Interface angezeigt wird. Dem sicheren Überwachungsgerät liegt unabhängig von dem verwendeten Bedienelement eine Funktionsanforderung zur Ausführung vor. Da diese Anfrage von einer unzuverlässigen, d. h. unsicheren Quelle stammt und somit verfälscht sein kann, muss der Bediener vor der endgültigen Funktionsausführung die getroffene Auswahl bestätigen. Dazu meldet das sichere Überwachungsgerät die ausgewählte Funktion in ikonisierter Darstellung an die Bedienoberfläche zurück. Durch die Rückmeldung der ausgewählten Funktion ist es dem Bediener möglich, etwaige Fehleingaben, Fehlinterpretationen durch die Software oder Übertragungsfehler auf der Strecke zwischen dem Bediengerät und dem sicheren Überwachungsgerät visuell zu erkennen. Im Fehlerfall kann der Bediener die Prozedur abbrechen und die Funktionsanforderungen erneut durchführen. Die ikonisierte Darstellung ermöglicht dem Bediener, das sichere Überwachungsgerät als Datenquelle zu identifizieren, da nur dort die ikonisierte Darstellung in Form z. B. eines Funktions-Ikons hinterlegt ist. Eine Datenverfälschung auf dem Übertragungsweg von dem sicheren Übertragungsgerät zum Bediengerät wäre sofort als Bildfehler erkennbar.

Gemäß einer bevorzugten Verfahrensweise ist in dem sicheren Speicher für jede auszuführende Funktion ein separates Funktions-Ikon, welches in einem gängigen Datenformat, z. B. als Bitmap-Datei vorliegt, gespeichert. Die Zuordnung der Funktions-Ikons zu den entsprechenden Funktionen muss dem sicheren Überwachungsgerät zuvor durch einen Konfigurationsvorgang bekannt gemacht werden. Passend zur ausgewählten Funktion wird ein Funktions-Ikon aus dem Speicher entnommen, an das Bediengerät gesendet, und auf dem Bediengerät angezeigt.

Das Funktions-Ikon stellt die ausgewählte Funktion in grafischer Form als Bild und/oder Text dar, so dass der Bediener die dargestellte Funktion leicht erkennen kann.

Eine weitere bevorzugte Verfahrensweise sieht vor, dass das sichere Überwachungsgerät mittels eines Zufallsgenerators eine mindestens einstellige Zufallszahl generiert, wobei die Zufallszahl abgespeichert wird.

Vorzugsweise wird die Zufallszahl ikonisiert und als Zahlencode in Form eines Zahlen-Ikons zusammen mit dem Funktions-Ikon als codierte grafische Information zur Anzeige an das grafische Bediener-Interface gesendet. Durch die codierte wie ikonisierte Darstellung ist die Codeverfälschung z. B. durch den Übertragungsweg sofort erkennbar.

Ein weiterer Verfahrensschritt zeichnet sich dadurch aus, dass die Bestätigungseingabe des Bedieners die Eingabe einer durch den ikonisierten Zahlencode vorgegebenen Ziffernfolge über eine Eingabeeinheit wie Zifferntastatur des grafischen Bediener-Interfaces umfasst, wobei die Eingabe der Ziffernfolge vorzugsweise durch Berühren von auf einem Touch-Display angezeigten virtuellen Taster der Zifferntastatur erfasst wird.

Der Bediener muss also die ikonisiert dargestellte Funktion kognitiv erkennen. Entspricht die dargestellte Funktion seiner zuvor getroffenen Auswahl, kann der Bediener dies durch Eingabe des ebenfalls ikonisiert dargestellten Bestätigungscodes bestätigen. Dazu muss der Bediener den ikonisierten Bestätigungscode kognitiv erkennen und als Ziffernfolge über eine Tastatur eingeben. Der angegebene Zahlencode wird anschließend an das sichere Überwachungsgerät zur Überprüfung gesendet.

Die ikonisierte Darstellung des Bestätigungscodes ist nur mit erheblichem algorithmischem Aufwand maschinenlesbar. Ein Bediener hingegen kann durch seine kognitiven Fähigkeiten den ikonisierten Bestätigungscode leicht identifizieren und durch Eintippen der erkannten Ziffernfolge auf einer Tastatur in eine maschinenlesbare Ziffernfolge umwandeln. Durch die ikonisierte Darstellung wird verhindert, dass z. B. die Bedieneroberfläche den vom sicheren Überwachungsgerät erhaltenen Code direkt wieder an das sichere Überwachungsgerät zurücksendet und so selbständig eine ungewollte Bestätigung durchführt. Vielmehr ist für die Erkennung des ikonisiert dargestellten Bestätigungscodes immer ein Bediener erforderlich.

Ein alternatives Verfahren sieht vor, dass das Funktions-Ikon an einer von dem sicheren Überwachungsgerät bestimmten Anzeige-Position in einem Bild positioniert und das Bild als codierte grafische Information an das grafische Bediener-Interface gesendet und auf dem Display angezeigt wird.

Dabei ist bevorzugt vorgesehen, dass das Bild in dem sicheren Speicher des sicheren Überwachungsgerätes mit leerem Bildinhalt in einem dem Datenformat des Funktions-Ikons entsprechenden Datenformat abgespeichert ist und dass das Bild mit leerem Bildinhalt als Bildrahmen für die Darstellung des zumindest einen Funktions-Ikons verwendet wird.

Vorzugsweise wird das Funktions-Ikon entsprechend der angewählten Funktion oder Betriebsart aus dem sicheren Speicher entnommen und an eine zufällig gewählte U-/V-Position in das Bild kopiert.

Die gewählte U-/V-Position wird durch den Zufallsgenerator bestimmt und ist nur dem sicheren Überwachungsgerät bekannt.

Schließlich wird das erzeugte Bild als Ganzes an das Bediengerät gesendet und auf dem Display an einer definierten Position angezeigt.

Zur Bestätigung der Eingabe ist vorgesehen, dass die X-, Y-Koordinate des Auswahlpunktes erfasst, an das sichere Überwachungsgerät gesendet und dass die X-, Y-Koordinate mit der U-V-Position des Funktions-Ikons in dem Bild verglichen wird und dass dann, wenn die Koordinaten innerhalb einer definierten Toleranz übereinstimmen, die angeforderte Funktion oder Betriebsart ausgeführt wird.

Als ergänzende Maßnahme zur Erhöhung der Zuverlässigkeit ist vorgesehen, dass die Betätigung des Funktions-Ikons mit einer definierten Geste verknüpft ist, wobei nach Betätigung des Funktions-Ikons, d. h. bei gedrückter Maus-Taste bzw. bei anhaltender Fingerberührung des Touch-Displays mit der Auswahleinrichtung wie Maus oder Finger eine Bewegung erfolgen muss, wie Ziehen in eine definierte Richtung, eine Linearbewegung oder Kreisbewegung.

Die Aufgabe wird auch durch ein Verfahren mit folgenden Verfahrensschritten gelöst:
- Anzeigen zumindest eines eine Funktion oder Betriebsart des Industrieroboters repräsentierenden virtuellen Bedienelementes auf dem Touch-Display,
- Auswahl einer gewünschten Funktion oder Betriebsart durch Betätigen des zumindest einen virtuellen Bedienelementes durch einen Bediener,
- Erfassen der Bestätigung des zumindest einen virtuellen Bedienelementes und Aussenden eines der ausgewählten Funktion oder Betriebsart entsprechenden Steuersignals an ein sicheres Überwachungsgerät,
- Auswertung des Steuersignals in dem sicheren Überwachungsgerät und Auswahl einer der ausgewählten Funktion oder Betriebsart zugeordneten grafischen Information,
- Erzeugen eines Bildes, in dem die grafische Information an einer von dem sicheren Überwachungsgerät bestimmten Anzeige-Position positioniert ist,
- Übertragung des Bildes an das Bediengerät und Anzeige des Bildes mit der grafischen Information auf dem Touch-Display,
- Erfassen einer Berührungs-Position bei Berührung der angezeigten grafischen Information durch den Bediener,
- Rücksenden der Berührungs-Position an die Sicherheitssteuerung,
- Vergleich der empfangenen Berührungs-Position mit der vorgegebenen Anzeige-Position und
- Ausführen der gewählten Funktion oder Betriebsart, wenn die Berührungs-Position mit der Anzeige-Position vorzugsweise innerhalb einer definierten Toleranz übereinstimmt.

Eine bevorzugte Verfahrensweise zeichnet sich dadurch aus, dass die Anzeige-Position, in der die grafische Information innerhalb des Bildes angezeigt wird, zufällig bestimmt wird.

Die Übertragung des Bildes mit integrierter grafischer Information erfolgt als Bilddatei wie Bitmap von dem sicheren Überwachungsgerät zu dem Bediengerät und wird sodann auf dem Touch-Display in einer von dem sicheren Überwachungsgerät vorgegebenen oder dem sicheren Überwachungsgerät bekannten Position angezeigt.

Vorzugsweise wird als grafische Information ein der Funktion oder Betriebsart entsprechendes virtuelles Bedienelement angezeigt oder bildhaft ein Zahlencode dargestellt.

Gemäß eines bevorzugten Verfahrens wird die grafische Informationen in einem Speicher des sicheren Überwachungsgerätes in sicherer Technik vorzugsweise zweikanalig gespeichert. Auch die Auswertung des Steuersignals erfolgt in dem sicheren Überwachungsgerät in sicherer Technik, vorzugsweise zweikanalig.

Gemäß einer weiteren bevorzugten Ausführung des Verfahrens ist vorgesehen, dass die Berührung des virtuellen Bedienelementes auf der Oberfläche des Touch-Displays durch Ermitteln einer ersten Koordinate eines Berührungspunktes erfasst wird und dass eine Auslösung der Funktion des virtuellen Bedienelementes erfolgt, wenn die erste Koordinate des Berührungspunktes nach bleibendem Kontakt mit der Oberfläche des Touch-Displays einen vorgegebenen Koordinatenbereich durch eine manuelle Aktion der Bedienperson verlässt.

Dabei kann die manuelle Aktion durch eine Gestik der Bedienperson ausgelöst werden. Die Gestik kann durch Ziehen eines Fingers der Bedienperson auf dem Touch-Display in dem oder aus dem vorgegebenen Koordinatenbereich ausgeführt werden. Vorzugsweise wird die Gestik in eine definierte Richtung ausgeführt, wobei die Sensitivität auf die Fingerbewegung, die Intensität der Gestik stufenlos eingestellt werden kann, um eine Aktion auszulösen.

Des Weiteren ist vorgesehen, dass die Auslösung einer Touch-Funktion eine manuelle Aktion des Bedieners auf dem Touch-Display erfordert. Um ein versehentliches Auslösen von virtuellen Bedienelementen durch unbeabsichtigte Berührung zu verhindern, wird eine Funktion erst ausgelöst, wenn nach der Berührung des Touch-Displays eine spezielle "Kleingestik" ausgeführt wird, z.B. Verziehen des Fingers in eine definierte Richtung. Somit ergibt sich ein "reliable touch".

Die zum Auslösen einer Funktion erforderliche Gestik, also die erforderliche Intensität oder Art der Gestik kann stufenlos eingestellt werden: Sie reicht von einer einfachen Fingerberührung, allgemein übliche Bedienung des Touch-Displays, bis hin zu einer definierten Geste. Durch haptische Marken, wie die spezielle Ausprägung der Fingermulden im Displayrand, kann der Finger in Fortsetzung der Fingermulden auf das Touch-Display gleiten und dabei eine Funktion auslösen. Merkt der Bediener, dass er eine ungewollte Funktionsauslösung eingeleitet hat, kann er die Funktionsauslösung durch Zurückziehen des Fingers in die Ursprungsposition unterdrücken.

Die gestellte Aufgabe wird des Weiteren durch eine Vorrichtung gemäß Anspruch 23 gelöst.

Eine bevorzugte Ausführungsform zeichnet sich dadurch aus, dass das sichere Überwachungsgerät einen sicheren, vorzugsweise zweikanaligen Speicher aufweist, in dem die zumindest eine grafische Information als Funktions-Ikon gespeichert ist.

Um eine codierte bzw. ikonisierte Darstellung zu erzeugen ist vorgesehen, dass die Codiereinrichtung eine Bilderzeugungseinrichtung aufweist, durch die das Funktions-Ikon in ein in dem Speicher gespeichertes Bild mit leerem Bildinhalt an eine zufällige U-/V-Position kopiert wird.

Um eine geeignete Codierung zu erreichen, ist vorgesehen, dass die Bildgenerierungseinrichtung einen Zufallsgenerator aufweist, mittels dem die U-/V-Position generiert wird.

Die Codiereinrichtung ist vorzugsweise mit der Vergleichseinrichtung gekoppelt, um die gesendete codierte Information mit der empfangenen eingegebenen Information zu vergleichen.

Gemäß einer weiteren Ausführungsform ist vorgesehen, dass die Codiereinrichtung einen zur Erzeugung einer Zufallszahl sowie eine Ikonisierungseinrichtung zur Erzeugung eines Zahlen-Ikons aus der Zufallszahl aufweist.

Zur Ausführung bzw. Freigabe der angeforderten Funktion ist vorgesehen, dass die Vergleichseinrichtung mit einem sicheren Ausgang gekoppelt ist.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden Ausführungsbeispielen.

Es zeigen:
- Fig. 1: ein Programmierhandgerät zur Bedienung eines Industrieroboters,
- Fig. 2: einen Abschnitt eines an das Touch-Display angrenzenden Displayrahmens des Programmierhandgerätes,
- Fig. 3: einen zweiten Abschnitt eines an das Touch-Display angrenzenden Display-Rahmens,
- Fig. 4: einen dritten Abschnitt eines an das Touch-Display angrenzenden Display-Rahmens,
- Fig. 5: eine Rückansicht des Programmierhandgerätes,
- Fig. 6: ein schematisches Verfahren zur Bedienung eines Industrieroboters mit einem Bediengerät,
- Fig. 7: einen Ausschnitt einer Bedienoberfläche des Bediengerätes mit virtuellen Bedienelementen,
- Fig. 8: einen Ausschnitt einer Bedienoberfläche des Bediengerätes mit einem Bild mit grafischer Information,
- Fig. 9: eine schematische Darstellung einer ersten Ausführungsform einer Kommunikation zwischen dem Bediengerät und einem sicheren Überwachungsgerät,
- Fig. 10: eine schematische Darstellung eines in einem Bild dargestellten virtuellen Bedienelementes mit Gestenfunktion,
- Fig. 11: eine schematische Darstellung einer zweiten Ausführungsform einer Kommunikation zwischen dem Bediengerät und dem sicheren Üb erwachungsgerät,
- Fig. 12: eine ikonisierte Darstellung eines Zahlencodes,
- Fig. 13: eine Bedienoberfläche des Bediengerätes mit verschiedenen Verfahrflächen und
- Fig. 14: ein virtuelles Bedienelement zur Rekalibrierung des Koordinatensystems des Bediengerätes.

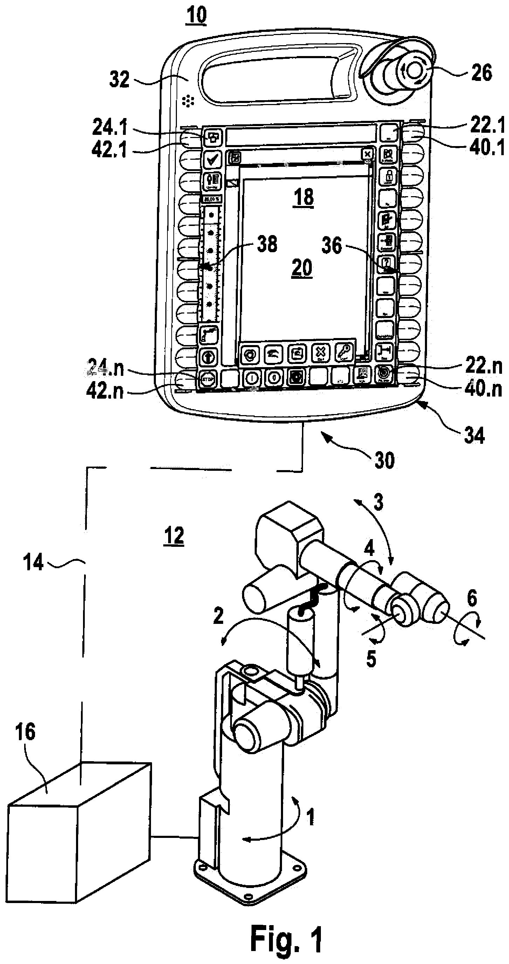

Fig. 1 zeigt eine Vorrichtung 10 in Form eines Programmierhandgerätes zur Bedienung eines Industrieroboters 12. Dazu ist das Handgerät 10 über eine drahtlose oder drahtgebundene Kommunikationsverbindung 14 mit einer Robotersteuerung 16 verbunden. Das Handgerät 10 umfasst ein grafisches Bediener-Interface 18 mit einem berührungsempfindlichen Display 20 nachfolgend Touch-Display genannt. Das Touch-Display 20 dient zur Anzeige zumindest eines virtuellen Bedienelementes 22.1...22.n, 24.1...24.n welches eine Funktion zur Steuerung, Programmierung oder Bedienung des Industrieroboters 12 repräsentiert, wobei bei Berührung des virtuellen Bedienelementes 22.1...22.n, 24.1...24.n mit einem Finger einer Bedienperson die zugeordnete Funktion ausgelöst wird.

Das Handgerät 10 umfasst des Weiteren eine Steuereinheit 30 zur Steuerung des grafischen Bediener-Interface 18 und zur Kommunikation mit der Robotersteuerung 16 sowie einen Positionssensor zur Bestimmung von Position und Neigung des Bediengerätes.

Das grafische Bediener-Interface 18 mit den Touch-Display 20 ist zusammen mit der Steuereinheit 30 in einem Gehäuse 32 angeordnet. Das Gehäuse 32 bildet einen Displayrahmen 34, der das Touch-Display 20 randseitig umschließt. Auf einer Oberseite des Gehäuses 32 ist des Weiteren ein sicherheitsgerichteter Not-Halt Schalter 26 angeordnet.

Die virtuellen Bedienelemente 22.1 .... 22.n sowie 24.1 ... 24.n sind entlang jeweils eines an das Touch-Display 20 angrenzenden Rahmenabschnitts 36, 38 des Displayrahmens angeordnet. Um eine Blind-Bedienung der virtuellen Bedienelemente 22.1 ... 22.n bzw. 24.1 ... 24.n zu ermöglichen, sind gemäß eines ersten eigenständigen Erfindungsgedankens in dem Rahmenabschnitt 36, 38 jeweils haptische Marken 40.1 ... 40.n bzw. 42.1 ... 42.n angeordnet. Jeder haptischen Marke 40.1 ... 40.n, 42.1 ... 42.n ist ein virtuelles Bedienelement 22.1 ... 22.n, 24.1 ... 24.n zugeordnet.

Dabei grenzt insbesondere das virtuelle Bedienelement 22.1 ... 22.n, 24.1 ... 24.n unmittelbar an der haptischen Marke 40.1 ... 40.n bzw. 42.1 ... 42.n an, so dass ein unmittelbarer Übergang von der haptischen Marke 40.1 ... 40.n bzw. 42.1 ... 42.n zum virtuellen Bedienelement 22.1 ... 22.n, 24.1 ... 24.n erfolgt. Quasi in einem Zug wird infolgedessen ein entlang einer haptischen Marke 40.1 ... 40.n bzw. 42.1 ... 42.n geführter Finger zum virtuellen Bedienelement 22.1 ... 22.n, 24.1 ... 24.n geführt. Hierdurch werden Fehlbedienungen vermieden bzw. minimiert: Erst tasten, dann auslösen. Ferner ist es nicht erforderlich, dass der Touchscreen, also das Display 20 besonders gestaltet werden muss. Insbesondere und in Abweichung vom Stand der Technik ist es nicht erforderlich, dass auf das Display besondere überlagerte Materialien angebracht werden, wodurch andernfalls Transparenzeinbußen auftreten.

Die haptischen Marken 40.1 ... 40.n bzw. 42.1 ... 42.n bilden eine Führung, durch die ein Finger einer Bedienperson zu dem zugeordneten virtuellen Bedienelement 22.1 ... 22.n, 24.1 ... 24.n geführt wird.

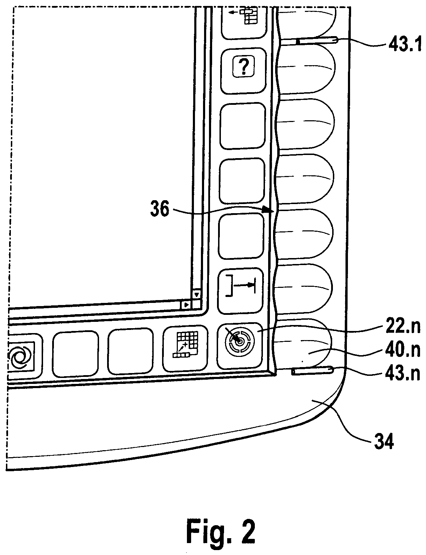

Fig. 2 zeigt eine vergrößerte Darstellung der Bedienelemente 22.1 ... 22.n und den diesen zugeordneten haptischen Marken 40.1 ... 40.n.

Durch die Anordnung der virtuellen Bedienelemente 22.1 ... 22.n bzw. 24.1 ... 24.n entlang der die haptischen Marken 40.1 ... 40.n, 42.1 ... 42.n aufweisenden Rahmenabschnitte 36, 38 wird eine zuverlässige Bedienung der virtuellen Bedienelemente gewährleistet. Dabei dient der abgesetzte und besonders ausgeprägte Rahmenabschnitt 36, 38 zur taktilen Orientierung auf dem Touch-Display 20.

In dem in Fig. 1 und Fig. 2 dargestellten Ausführungsbeispiel sind die haptischen Marken 40.1 ... 40.n, 42.1 ... 42.n als Fingermulden ausgebildet, die so ausgeformt sind, dass sie mit den Fingern zuverlässig ertastet werden können und eine Führung des Fingers von den Rahmenabschnitten 36, 38 in Richtung auf das zugeordnete virtuelle Bedienelement 22.1 ... 22.n bzw. 24.1 ... 24.n sicherstellen.

Ferner sind haptische Marken 43.1 ... 43.n vorgesehen, die als Noppen ausgebildet und auf einer Oberfläche des Displayrahmens 34 angeordnet sind.

Dadurch wird zum einen die prinzipiell fehlende Haptik eines Touch-Displays 20 kompensiert und zum anderen kann der Bediener die visuelle Aufmerksamkeit auf den Industrieroboter und den Prozess richten, ohne auf das Handbedien- bzw. Handgerät 10 schauen zu müssen, wodurch insgesamt die Bediensicherheit erhöht wird. Eine "Blindbedienung" wird ermöglicht.

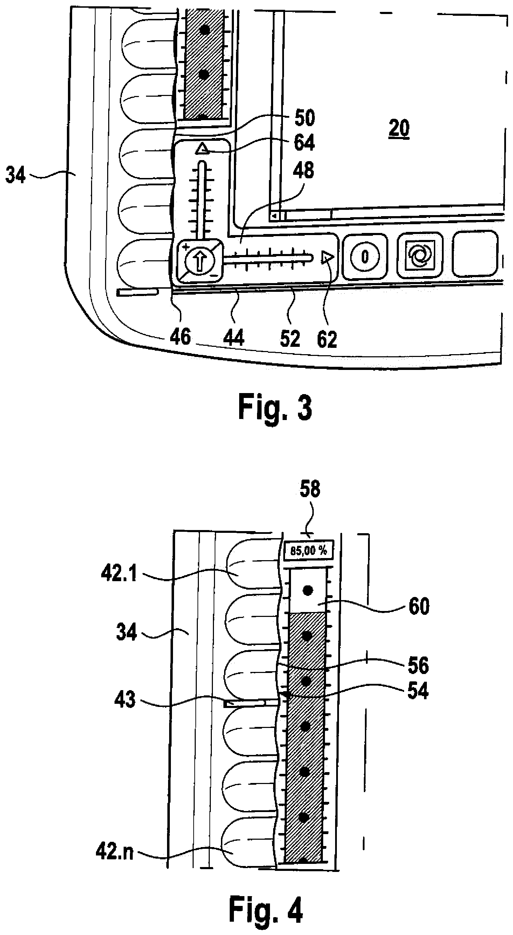

Fig. 3 zeigt eine Ausführungsform einer haptischen Marke 44 als eine an das Touch-Display 20 angrenzende Rahmenecke 46 des Displayrahmens 34. Durch die Rahmenecke 46 des Displayrahmens 34 wird eine eindeutige, exakte Position auf dem Touch-Display 20 definiert. Zu diesen ausgewählten Positionen ist ein virtuelles Bedienelement 48 auf dem Touch-Display 20 vorgesehen, welches beispielsweise in linearer Richtung entlang eines displayseitigen Rahmenabschnitts 50, oder des anderen displayseitigen Rahmenabschnitts 52 der Rahmenecke 46 bewegt wird.

Fig. 4 zeigt eine weitere Ausführungsform einer haptischen Marke 54, die als displayseitiger Rahmenabschnitt 56 des Displayrahmens 34 ausgebildet ist. Entlang des Rahmenabschnitts 56 kann der Finger einer Bedienperson eine Verschiebebewegung ausführen, über die ein entlang des Rahmenabschnitts 56 verlaufendes virtuelles Schiebe-Element 60 verstellt werden kann.

Die in Fig. 1 und 2 dargestellten und als Fingermulden ausgebildeten haptischen Marken 40.1 ... 40.n, 42.1 ... 42.n bilden eine haptische Orientierung auf dem DisplayRand mit hoher Auflösung, z.B. für das Erfühlen von Positionen der virtuellen Bedienelemente 22.1 ... 22.n, 24.1 ... 24.n, da diese unmittelbar neben den Fingermulden angeordnet sind. Jeder Fingermulde kann ein virtuelles Bedienelement eindeutig zugeordnet werden. Die Fingermulden 40.1 ... 40.n, 42.1 ... 42.n sind halb offen ausgeführt und in Richtung des Touch-Displays 20 geöffnet, so dass ein Finger wie in einer Rinne geführt auf das Touch-Display gleiten und dort eine Funktion des virtuellen Bedienelementes 22.1 ... 22.n, 24.1 ... 24.n auslösen kann.

Gemäß eines eigenständigen Erfindungsgedankens ist vorgesehen, dass die Auslösung einer dem virtuellen Bedienelement 22.1...22.n, 24.1...24.n zugeordneten Funktion eine manuelle Aktion der Bedienperson auf dem Touch-Display 20 erfordert. Um ein versehentliches Auslösen der virtuellen Bedienelemente 22.1...22.n, 24.1...24.n durch unbeabsichtigte Berührung zu verhindern, wird eine Funktion erst ausgelöst, wenn nach der Berührung des Touch-Displays 20 eine vordefinierte Gestik wie beispielsweise Verziehen des Fingers in eine definierte Richtung ausgeführt wird. Die Sensibilität der Reaktion auf die Fingerbewegung kann über einen Regler stufenlos eingestellt werden. Somit kann die Intensität der erforderlichen Gestik, um Funktionen auszulösen, stufenlos eingestellt werden. Sie reicht von einer einfachen Fingerberührung, allgemein übliche Bedienung des Touch-Displays 20, bis hin zu einer speziellen kleinen Geste. Durch die besondere Ausprägung der Fingermulden 22.1...22.n, 24.1...24.n im Rahmenabschnitt 36, 38 des Displayrahmens kann der Finger in Fortsetzung der Fingermulden auf das Touch-Display gleiten und dabei eine Funktion auslösen. Merkt der Bediener, dass er eine ungewollte Funktionsauslösung eingeleitet hat, kann er die Funktionsauslösung durch Zurückziehen des Fingers in die Ursprungsposition unterdrücken.

Sobald die Bedienperson mit dem Finger z. B. ausgehend von der Fingermulde 40.n das virtuelle Bedienelement 22.n berührt, wird eine entsprechende Koordinate auf dem Touch-Display durch die Steuereinheit 30 erfasst. Entsprechend der Definition einer voreingestellten Gestik wird die zugehörige Funktion erst dann ausgelöst, wenn der Finger der Bedienperson einen vorgegebenen Koordinatenbereich verlässt bzw. einen vordefinierten Koordinatenbereich erreicht. Wenn das virtuelle Bedienelement ausgelenkt ist und somit auslösebereit ist (Auslösung erfolgt bei Loslassen des Fingers), wird dies durch eine optische Kennung, z. B. durch eine farbige Umrandung, am Bedienelement gekennzeichnet. Wird eine versehentliche Auslenkung wieder rückgängig gemacht, indem das Bedienelement wieder in den Ursprung zurückgezogen wird, wird dies durch ein Verschwinden dieser optischen Kennung kenntlich gemacht.

Gemäß einer weiteren eigenerfinderischen Ausführungsform der Erfindung werden virtuelle Bedienelemente 48, die z. B. in der Rahmenecke 46 des Displayrahmens 34 platziert sind, mit einer besonderen Gestensteuerung verknüpft. Diese werden z.B. entlang der Rahmenabschnitte 50, 52 in zwei Richtungen 62, 64 verschoben, wie dies in Fig. 3 dargestellt ist. Jeder Bewegungsrichtung 62, 64 ist eine wählbare Funktion zugeordnet. So ist es z.B. möglich, beim Bewegen entlang des Rahmenabschnitts 52 eine Funktion "A" und beim Bewegen entlang des Rahmenabschnitts 50 eine Funktion "B" zu aktivieren. Der Grad der Auslenkung wird dabei ausgewertet, wobei zwei Auswertungsmöglichkeiten vorgesehen sind.

Gemäß einer ersten Auswertungsmöglichkeit wird der Grad der Auslenkung sofort als analoger Parameter wie Geschwindigkeitsvorgabe an die Funktion übergeben. Wird der Finger in ausgelenkter Stellung losgelassen, springt der Analogwert sofort auf null. Wird der Finger gleitend wieder in die Ausgangsposition geführt, stellt sich der Parameter analog der Auslenkung wieder auf null zurück. Diese Funktion kann verwendet werden, um z.B. ein Bewegungsprogramm in positive oder negative Richtungen zu starten und dabei jeweils stufenlos in der Geschwindigkeit variieren.

Gemäß einer zweiten Auswertungsmöglichkeit ist vorgesehen, dass bei Überschreitung eines definierbaren Schwellwertes eine schaltende Funktion ausgelöst wird. Die Aktivierung der Funktion erfolgt erst dann, wenn der Finger in ausgelenkter Stellung das Touch-Display 20 verlässt. Wird der Finger jedoch ohne Loszulassen auf den Rahmenabschnitten 50, 52 wieder in die Nulllage zurückgeführt, wird die Funktionsauslösung unterdrückt.

Ein weiterer eigenerfinderischer Gedanke der Erfindung bezieht sich auf die Realisierung einer sogenannten Override-Funktion (Geschwindigkeitsregler), die über das als Schiebe-Bedienelement 60, welches in Fig. 4 dargestellt ist, realisiert wird. Dazu wird das Schiebe-Bedienelement 60 angrenzend neben dem Rahmenabschnitt 56 mittig zur haptischen Marke 43 platziert. Mit Hilfe der haptischen Marke 43 kann die Position des Schiebe-Bedienelementes 60 ertastet und durch Verschiebung des Fingers entlang Gehäuserandes 56 verstellt werden. Die blinde Verstellung wird durch die haptischen Marken 42.1...42.n der Rahmenabschnitte 38, 56 zusätzlich unterstützt. Der sogenannte Override kann bei einer Verschiebung zwischen zwei haptischen Marken um einen definierten Betrag, z. B. 20 %, verstellt werden. Mittels des randseitig angeordneten Schiebe-Bedienelementes 60 können auch andere analoge Größen wie Prozessparameter in Blindbedienung eingestellt werden.

Ein weiteres eigenerfinderisches Merkmal bezieht sich auf die symmetrische Anordnung der haptischen Marken 40.1...40.n, 42.1...42.n bezogen auf die Längs- bzw. Quermittenachse des Touch-Displays 20. Die Längsmittenachse ist dabei die Gerade, die mittig und parallel zu den längeren Längsrahmenschenkeln des Displayrahmens 34 verläuft. Senkrecht hierzu verläuft die Quermittenachse, also mittig zwischen und parallel zu den kürzeren Querschenkeln des Displayrahmens 34. Dadurch wird gewährleistet, dass das Handgerät 10 sowohl für eine Rechtshänder-Bedienung als auch eine Linkshänder-Bedienung geeignet ist. Dies wird insbesondere durch das konsequente tastenlose Design des grafischen Bediener-Interfaces und durch die symmetrische Anordnung der haptischen Marken erreicht. Somit kann das grafische Bediener-Interface über eine einfache Set-Up-Funktion von Rechtshänder-Bedienung auf Linkshänder-Bedienung umgeschaltet werden. Dabei werden alle Positionen der virtuellen Bedienelemente 22.1...22.n, 24.1...24.n an der Längsmittenachse des Touch-Displays 20 gespiegelt.

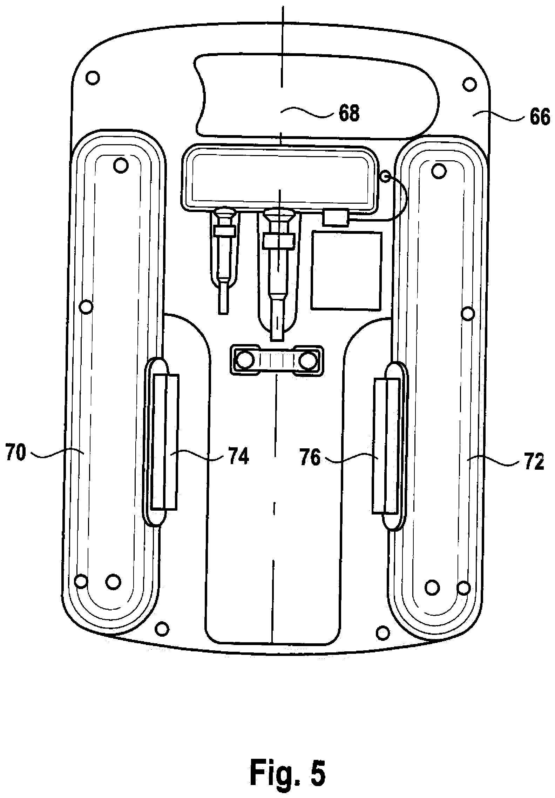

Fig. 5 zeigt eine Rückseite 66 des Gehäuses 32. Auf der Rückseite 66 und symmetrisch zur Längsachse 68 sind platzierte Halteleisten 70, 72 angeordnet, an denen das Handgerät 10 mit einer oder mit beiden Händen sicher gehalten werden kann. Die Halteleisten 70, 72 können eine Außengeometrie aufweisen, die Zylinderabschnitten entspricht, wobei die Halteleisten 70, 72 vom Außenrand, also von den Längsrändern des Displayrahmens 34 ausgehen sollten. In jeder Halteleiste 70, 72 ist jeweils ein Zustimm-Schalter oder Zustimm-Taster 74, 76 integriert, von denen wahlweise einer für die Verfahrfreigabe des Industrieroboters betätigt werden muss.

Durch diese symmetrische Anordnung wird einer Handermüdung vorgebeugt, da die Zustimmschalter 74, 76 wechselweise mit der linken oder rechten Hand betätigt werden können. Bei Handermüdung kann die jeweils andere Hand die Zustimmung übernehmen, ohne dass dadurch die Verfahrfreigabe für die Roboterbewegung unterbrochen wird.

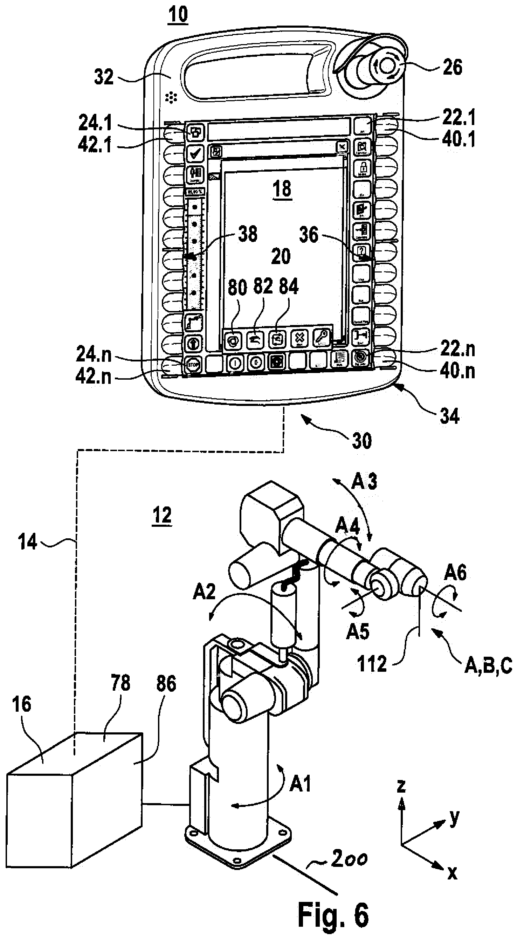

Eine weitere eigenerfinderische Ausführungsform der Erfindung zeichnet sich dadurch aus, dass ein bislang üblicher Schlüsselschalter für die Anwahl der Roboterbetriebsarten "Einrichten", "Automatik", "Automatik-Test" durch eine Softwarefunktion ersetzt wird. Die Besonderheit liegt u.a. in der Datenverarbeitung in sicherer Technik. Das Touch-Display 20 ist prinzipiell ein einkanaliges und somit unsicheres Gerät. Unter Zuhilfenahme einer in die Robotersteuerung 16 gemäß Fig. 6 integrierten Sicherheitssteuerung 78, nachfolgend sicheres Überwachungsgerät 78 genannt, wird eine sichere Funktionalität der Software gewährleistet. Das sichere Überwachungsgerät 78 ist in der Europäischen Patentanmeldung 1 035 953 beschrieben, deren Offenbarung vollumfänglich in die vorliegende Anmeldung aufgenommen wird. Die erfindungsgemäße Lehre ist jedoch nicht auf eine Sicherheitssteuerung entsprechend der Europäischen Patentanmeldung 1 035 953 beschränkt.

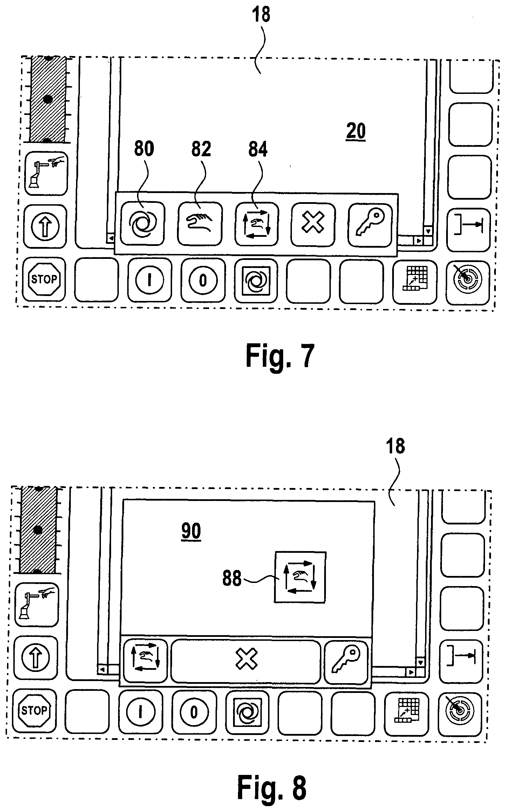

Auf dem Touch-Display 20 werden von der Bedienoberfläche 18 verschiedene Betriebsart-Optionen in Form von virtuellen Bedienoberflächen 80, 82, 84 wie Softkeys zur Auswahl angeboten, wie dies in Fig. 7 dargestellt ist. Über die Berührung eines dieser Softkeys 80, 82, 84 wählt der Bediener eine neue Betriebsart "X" aus. Von der Software der Bedienoberfläche wird die neu ausgewählte Betriebsart als Kommando "Anforderung neue Betriebsart-X" an das sichere Überwachungsgerät 78 gesendet. Das sichere Überwachungsgerät 78 entnimmt aus seinem Speicher 86 eine dieser Betriebsart entsprechende grafische Information wie Icon 88 und platziert es an eine zufällig bestimmte Anzeige-Position in einem größeren Bild 90. Die Position des Icons 88 in dem Bild 90 ist nur dem sicheren Überwachungsgerät 78 bekannt. Dieses Bild 90 wird als Bilddatei wie Bitmap zur Bedienoberfläche 18 gesendet und dort in einer definierten Position zur Anzeige gebracht, wie dies in Fig. 8 dargestellt ist.

Durch einen Fingertip auf das dargestellte Icon 88 muss der Bediener die vom sicheren Überwachungsgerät 78 erkannte Betriebsart bestätigen. Eine Berührungs-Position auf dem Touch-Display wird in Form von Touchkoordinaten X/Y erfasst und an das sichere Überwachungsgerät 78 zurückgesendet. Dieses vergleicht die Berührungs-Position mit der Anzeige-Position des Icons 88 in dem Bild 90. Der Vergleich erfolgt unter Berücksichtigung der bekannten Position des Bildes 90 auf dem Touch-Display 20 und der bekannten zufälligen Anzeige-Position des Icons innerhalb des Bildes 90. Sind beide Positionen (innerhalb einer definierten Toleranz) gleich, wird der eingeleitete Betriebsartenwechsel ausgeführt. Andernfalls wird der Betriebsartenwechsel verworfen und die vorherige Betriebsart bleibt erhalten.

Durch dieses Verfahren entsteht ein sicherer Wirkkreis zwischen dem Bediener und dem sicheren Überwachungsgerät 78:
- der Bediener wählt eine Betriebsart an,
- das sichere Überwachungsgerät 78 zeigt die erkannte Betriebsart auf dem Bediengerät 10 an,
- der Bediener bestätigt dem sicheren Überwachungsgerät 78 die Richtigkeit der angezeigten Betriebsart,
- das sichere Überwachungsgerät 78 stellt die neue Betriebsart ein.

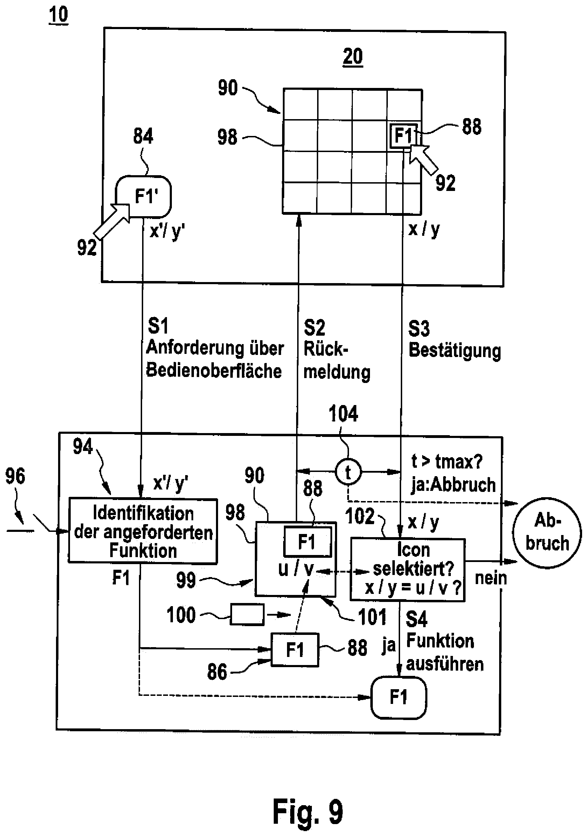

Eine erste Alternative des Verfahrens sowie das sichere Überwachungsgerät 78 wird nachfolgend mit Bezug zu Fig. 9 erläutert. Auf dem Touch-Display 20 des Bediengerätes 10 wird das virtuelle Bedienelement 84 visuell in einer definierten X'-, Y'-Position dargestellt. Das virtuelle Bedienelement 84 steht stellvertretend für eine auszulösende Sicherheitsfunktion F1 und kann mittels einer Auswahleinrichtung 92 wie Zeigersteuerung in Form einer PC-Maus oder Joy-Stick auf einem Display oder mittels eines Fingers 92 auf dem Touch-Display 20 selektiert werden, um so eine mit dem virtuellen Bedienelement 84 verknüpfte Sicherheitsfunktion F1 auszuwählen.

Bei Betätigung des virtuellen Bedienelementes 84 mittels des Fingers 92 der Bedienperson wird eine Auswahlposition, d. h. die Berührungsstelle auf dem Touch-Display 20 in Form einer X'-, Y'-Koordinate erfasst und im Verfahrensschritt S1 an das sichere Überwachungsgerät 78 gesendet. Der Empfang einer X'-, Y'-Koordinate wird als Aufforderung verstanden, eine sichere Funktion auszuführen. Das sichere Überwachungsgerät 78 weist eine Auswerte- und Identifikationseinrichtung 94' auf, die mit dem sicheren Speicher 86 gekoppelt ist. In dem Speicher 86 ist jeder X'-, Y'-Koordinate eines virtuellen Bedienelementes 88 eine Sicherheitsfunktion bzw. Betriebsart zugeordnet. Durch die in dem sicheren Speicher 86 gespeicherte Zuweisung erkennt das sichere Überwachungsgerät 78, welche Sicherheitsfunktion den jeweiligen X'-, Y'-Koordinaten zugeordnet ist, und kann somit die von dem Bediener angeforderte Funktion oder Betriebsart eindeutig identifizieren.

Alternativ kann das Bediengerät selbst eine Vorauswertung der X'-, Y'-Koordinaten durchführen und eine entsprechende Funktion oder Betriebsart identifizieren, die dann als Funktionskennzeichen, wie z. B. Funktionsname oder Funktionsnummer, an das sichere Überwachungsgerät gesendet und ausgewertet wird.

Optional kann eine Aufforderung zur Funktionsausführung auch von einem weiteren Bedienelement 96 unabhängig von dem Bediengerät 10 erzeugt werden, wobei das weitere Bedienelement als ein mit dem sicheren Überwachungsgerät 78 verbundener Signalgeber 96 wie Schlüsselschalter oder Taster ausgebildet ist.

Unabhängig von der Art des Bedienelementes empfängt das sichere Überwachungsgerät 78 eine Funktionsanforderung, um eine Funktion oder Betriebsart auszuführen. Diese wird in der Auswerte- und Identifikationseinrichtung 94 ausgewertet.

In dem sicheren Speicher 86 des sicheren Überwachungsgerätes 78 ist dazu für jede auszuführende Funktion ein entsprechendes Funktions-Ikon 88 in einem Datenformat wie Bitmap-Datei abgespeichert. Die Zuordnung der Funktions-Ikons zu den entsprechenden Funktionen erfolgt über einen Konfigurationsvorgang.

Unabhängig davon ist in dem sicheren Speicher 86 des sicheren Überwachungsgerätes 78 das Bild 90 mit leerem Bildinhalt gespeichert. Das Bild 90 ist im gleichen Datenformat wie die Funktions-Ikons 88 abgespeichert und dient als ein Bildrahmen 98 für die Darstellung des Funktions-Ikons 88. Das Funktions-Ikon 88 wird in einer Codiereinrichtung 99 mittels einer Bildgenerierungseinrichtung 101 innerhalb des Bildrahmens 98 beliebig platziert. Entsprechend der ausgewählten Funktion wird ein im sicheren Speicher 86 hinterlegtes Funktions-Ikon 88 entnommen und an eine zufällig ausgewählte U-/V-Position in den Bildrahmen 98 kopiert. Die U-/V-Position wird durch einen Zufallsgenerator 100 ermittelt und ist nur dem sicheren Überwachungsgerät 78 bekannt. Das Funktions-Ikon 88 stellt idealerweise die angewählte Funktion in grafischer Form dar, so dass die Funktion von dem Bediener leicht identifiziert werden kann. Das Bild 90 mit Rahmen 98 und Funktions-Ikon 88 wird nun in Verfahrensschritt S2 als codierte grafische Information als Ganzes an das Bediengerät gesendet wie getunnelt und auf dem Display 20 angezeigt. Tunneln bedeutet in diesem Fall, dass die Daten unverfälscht und ohne weitere Datenverarbeitung von dem Sender zum Empfänger übertragen werden.

Der Bediener muss nun die durch das Funktion-Ikon 88 ikonisiert dargestellte Funktion kognitiv erkennen. Entspricht die dargestellte Funktion einer zuvor getroffenen Auswahl, kann dies durch Betätigen bzw. Selektion des dargestellten Funktions-Ikons 88 bestätigt werden.

Die Selektion bzw. Betätigung des Funktions-Ikons 88, welches auf einer zufälligen Position im Bildrahmen 98 des Bildes 90 dargestellt ist, ist mit der Eingabe eines einstelligen Bestätigungscodes vergleichbar. Bei Betätigung des angezeigten Funktions-Ikons 88 auf dem Touch-Display 20 werden X-/Y-Koordinaten des Betätigungspunktes erfasst und an das sichere Überwachungsgerät 78 im Verfahrensschritt S3 zur Überprüfung gesendet.

Die zufällige Position des Funktions-Ikons 88 ist nur mit Hilfe von Bildverarbeitungs-Algorithmen maschinell erkennbar. Ein Bediener hingegen kann durch seine kognitiven Fähigkeiten das Funktions-Ikon leicht identifizieren und mit der Auswahleinrichtung wie Finger oder Zeigersteuerung selektieren. Durch diese Maßnahme wird verhindert, dass z. B. die Bedienoberfläche selbständig eine ungewollte Bestätigung durchführt. Vielmehr ist für die Erkennung der Bildposition und Umwandlung in die X-/Y-Koordinaten durch Selektion immer ein Bediener erforderlich.

Die X-/Y-Koordinaten des Berührungspunktes werden an das sichere Überwachungsgerät gesendet und in diesem mittels einer Empfangs- und Vergleichseinrichtung 102 überprüft, ob die X-/Y-Koordinaten des Berührungspunktes zu den U-/V-Koordinaten des Funktions-Ikons passen. Dabei muss die X-Koordinate innerhalb eines Intervalls [U | U+ Ikon-Breite] und die Y-Koordinate innerhalb eines Intervalls [V | V+ Ikon-Höhe] liegen. Liegen die Koordinaten innerhalb der Ikon-Grenzen, ist dies ein Indiz dafür, dass der Bediener das angezeigte Funktions-Ikon erkannt hat, mit der ausgewählten Funktion einverstanden ist und diese bestätigt hat.

Liegen die Koordinaten außerhalb des Funktions-Ikons, wird die zuvor getroffene Anforderung verworfen und die Bestätigungsprozedur abgebrochen. Die Funktionsanforderung kann danach erneut durchgeführt werden.

Da in dem beschriebenen Ausführungsbeispiel an der Bestätigungsprozedur prinzipbedingt ein unsicheres Eingabegerät in Form des Touch-Displays 20 beteiligt ist, können weitere Maßnahmen getroffen werden, um die Zuverlässigkeit der Bestätigungsprozedur zu erhöhen.

So kann das Selektieren des Funktions-Ikons mit einer definierten "Geste" verknüpft werden. Dies bedeutet, dass nach dem Selektieren des Funktions-Ikons z. B. bei gedrückter Maus-Taste bzw. bei anhaltender Fingerberührung des Touch-Displays 20 mit einer Auswahleinrichtung wie Finger oder Zeiger eine Bewegung erfolgen soll (z. B. Ziehen in eine definierte Richtung). Erst, wenn die Geste beendet ist, erfolgt eine weitere Überprüfung im sicheren Überwachungsgerät.

Durch die notwendige Geste wird eine unbeabsichtigte Bestätigung verhindert, z. B., wenn eine unbeabsichtigte Berührung des Funktions-Ikons auf dem Touch-Display 20 erfolgt.

Die Größe und die Form der Geste wie Linearbewegung, Kreisbewegung kann der Bediener in dem sicheren Überwachungsgerät 78 konfigurieren. Damit das sichere Überwachungsgerät 78 die Geste erkennen kann, werden die X-/Y-Koordinaten hinreichend oft bzw. zyklisch übertragen und ausgewertet.

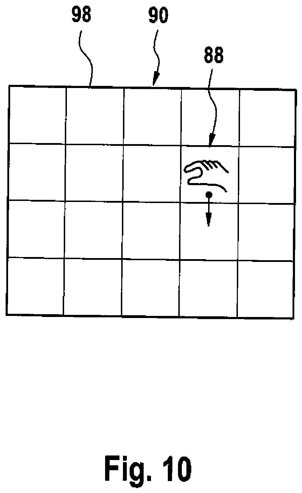

Optional kann die erforderliche Geste von dem sicheren Überwachungsgerät 78 selbst nach dem Zufallsprinzip ausgewählt werden. Zur besseren Bedienerführung kann die ausgewählte Geste zusammen mit dem Funktions-Ikon wie in Fig. 10 grafisch dargestellt werden.

Nach einer erfolgreichen Bestätigungseingabe, d. h. wenn die empfangene Bestätigungsinformation in Form der X-/Y-Koordinaten mit der Erwartungshaltung in Form der U-/V-Koordinaten übereinstimmt, wird die zuvor ausgewählte Funktion von dem sicheren Überwachungsgerät im Verfahrensschritt S4 ausgeführt. Die Ausführung kann z. B. das Setzen eines sicheren Ausgangs umfassen, um damit in einer Peripherie eine sicherheitsgerichtete Aktion auszulösen.

Es ist vorgesehen, dass die Bestätigungsprozedur innerhalb einer definierbaren Zeitspanne abgeschlossen ist. In einer Überwachungseinrichtung 104 wird die Zeitspanne t zwischen Aussenden des Bildes 90 und Empfangen der X-/Y-Koordinaten gemessen und mit einer definierten Zeitspanne tₘₐₓ verglichen. Überschreitet diese Zeit t die definierte Zeitspanne tₘₐₓ, wird der Bestätigungsvorgang abgebrochen. Die Funktionsaufforderung kann danach erneut durchgeführt werden. Somit wird verhindert, dass ein Bediener eine Funktionsauswahl tätigt, diese eine lange Zeit stehen lässt und dass anschließend ein unberechtigter Bediener die angewählte Funktion bestätigt.

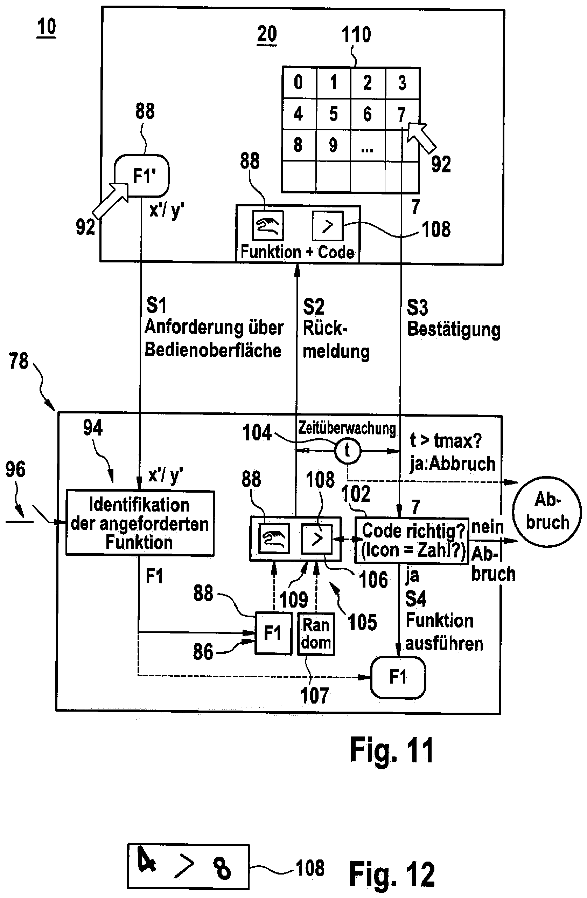

Fig. 11 zeigt ein alternatives Verfahren zur Auslösung einer sicherheitsgerichteten Funktion mittels des unsicheren Bediengerätes 10 in Verbindung mit dem sicheren Überwachungsgerät 78. Der Verfahrensschritt S 1 zur Anforderung einer Funktion durch das virtuelle Bedienelement 88 des Bediengerätes 10 oder durch den Signalgeber 96 entspricht dem Verfahrensschritt S1 gemäß Fig. 9 und wird daher nicht weiter erläutert.

Gleiches gilt für die Identifikation der angeforderten Funktion durch die Auswerte- und Identifikationseinheit 94, die ebenfalls mit Bezug zu Fig. 9 erläutert wurde.

Bei dem alternativen, eigenerfinderischen Verfahren wird zur ikonisierten Rückmeldung folgendes Verfahren verwendet.

Das sichere Überwachungsgerät besitzt in seinem Speicher 86 für jede auszuführende Funktion das entsprechende Funktions-Ikon 88, welches in einem üblichen Datenformat, wie z. B. Bitmap-Datei, abgespeichert ist. Die Zuordnung der Funktions-Ikons 88 zu den entsprechenden Funktionen ist durch einen Konfigurationsvorgang festgelegt.

Entsprechend der ausgewählten Funktion wird ein Funktions-Ikon 88 aus dem sicheren Speicher 86 entnommen. Das Funktions-Ikon 88 stellt idealerweise die angewählte Funktion in grafischer Form als Bild und/oder Text dar, so dass der Bediener die dargestellte Funktion leichter erkennen kann. Gleichzeitig generiert das sichere Überwachungsgerät 78 in einer Codiereinrichtung 105 mittels eines Zufallsgenerators 107 eine mindestens einstellige Zufallszahl 106, die für eine spätere Überprüfung abgespeichert wird.

Die Zufallszahl 106 wird in einer Einrichtung 109 ikonisiert und als Zahlen-Ikon 108 dargestellt, wie dies in Fig. 12 beispielhaft für eine 3-stellige Zahl gezeigt ist. Das Funktions-Ikon 88 wird zusammen mit dem Zahlen-Ikon 108 als codierte grafische Information an das Bediengerät 10 im Verfahrensschritt S2 übertragen und auf dem Display 20 angezeigt. Das Funktions-Ikon 88 sowie das Zahlen-Ikon 108, welches einem Zahlencode entspricht, können einzeln oder gleichzeitig an das Bediengerät 10 übertragen werden. Die Übertragung erfolgt durch Tunneln, wobei Tunneln bedeutet, dass die Daten unverfälscht und ohne weitere Datenverarbeitung von dem sicheren Überwachungsgerät 78 zu dem Bediengerät 10 übertragen werden. Durch die ikonisierte Darstellung 108 ist jede Codeverfälschung, z. B. durch den Übertragungsweg, sofort erkennbar.

Bei dem alternativen Verfahren erkennt der Bediener die ikonisiert dargestellte Funktion kognitiv. Entspricht die dargestellte Funktion 88 der zuvor getroffenen Auswahl, kann der Bediener dies durch Eingabe des ebenfalls in Form des Zahlen-Ikons 108 ikonisiert dargestellten Bestätigungs-Codes bestätigen.

Dazu muss der Bediener den ikonisiert dargestellten Bestätigungscode 108 kognitiv erkennen und als Ziffernfolge über eine auf dem Touch-Display 20 dargestellte virtuelle Tastatur 110 eingeben. Die eingegebene Zahlenfolge wird im Verfahrensschritt S3 an das sichere Überwachungsgerät 78 gesendet und in der Empfangs- und Vergleichseinrichtung 102 überprüft. Dabei wird geprüft, ob der zurückgemeldete Bestätigungscode in Form der Ziffernfolge mit der zuvor gespeicherten Zufallszahl 106 übereinstimmt.

Bejahendenfalls wird die Funktion im Verfahrensschritt S4 ausgeführt. Anderenfalls erfolgt ein Abbruch der Bestätigungsprozedur.

Die ikonisierte Darstellung des Bestätigungscodes ist nur mit erheblichem algorithmischem Aufwand maschinenlesbar. Ein Bediener hingegen kann durch seine kognitiven Fähigkeiten den ikonisierten Bestätigungscode leicht identifizieren und durch Eintippen der erkannten Ziffernfolge auf der Tastatur 110 in eine maschinenlesbare Ziffernfolge umwandeln. Durch die ikonisierte Darstellung 108 wird verhindert, dass z. B die Bedieneroberfläche den vom sicheren Überwachungsgerät erhaltenen Zahlencode 108 direkt wieder in das sichere Überwachungsgerät zurücksendet und so selbständig eine ungewollte Bestätigung durchführt. Vielmehr ist für die Erkennung des ikonisiert dargestellten Bestätigungscodes stets ein Bediener erforderlich.

Nach der erfolgreichen Bestätigung, d. h., wenn die empfangene Bestätigungsinformation - im vorliegenden Fall Zahlenfolge - mit der Erwartungshaltung - im vorliegenden Fall Zufallszahl - übereinstimmt, wird die zuvor angewählte Funktion vom sicheren Überwachungsgerät 78 im Verfahrensschritt S4 ausgeführt. Dies kann z. B. das Setzen eines sicheren Ausgangs sein, um damit in der Peripherie eine sicherheitsgerichtete Aktion auszulösen.

Die Bestätigungsprozedur muss innerhalb einer definierbaren kurzen Zeitspanne tₘₐₓ abgeschlossen sein. So wird verhindert, dass ein erster Bediener eine Funktionsauswahl tätigt, diese eine lange Zeit stehen lässt, und dass anschließend ein zweiter unberechtigter Bediener die ausgewählte Funktion bestätigt. Zwischen der Rückmeldung an den Bediener gemäß Verfahrensschritt S2 und der Bestätigung gemäß Verfahrensschritt S3 wird die Zeit t mittels der Überwachungseinrichtung 104 gemessen. Überschreitet diese Zeit t eine definierte Zeitspanne tₘₐₓ, wird der Bestätigungsvorgang abgebrochen. Die Funktionsanforderung kann danach erneut durchgeführt werden.

Optional kann eine Anforderung zum Betriebsartenwechsel auch über einen Hardware-Schlüsselschalter generiert werden.

Das Einstecken/Abziehen des Schlüssels in den Betriebartenwahlschalter wird durch ein Login/Logout-Verfahren mittels PIN nachgebildet.

Die Möglichkeit nach dem Berühren des Touch-Displays 20 den Finger mehr oder weniger zu "ziehen", wird gemäß eines eigenerfinderischen Verfahrens genutzt um eine analoge Verfahrvorgabe für den Industrieroboter 12 zu erzeugen. So kann der Industrieroboter 12 gemäß Fig. 6 in 6 Freiheitsgraden z. B. X, Y, Z und Orientierungen A, B, C eines Werkzeugs 112 feinfühlig gesteuert werden.

Mit der Auslenkung des Fingers einer Bedienperson ist es möglich eine Positionsvorgabe an den Industrieroboter 12 zu geben, ähnlich der Cursorsteuerung per Touchpad bei einem Notebook. Der Industrieroboter 12 lässt sich dabei gleichzeitig in zwei Koordinatenrichtungen, z. B. X und Y, verfahren.

In einem weiteren Modus wird durch eine Auslenkung des Fingers eine Geschwindigkeitsvorgabe für den Industrieroboter 12 erzeugt: je mehr der Finger ausgelenkt ist, umso schneller fährt der Roboter.

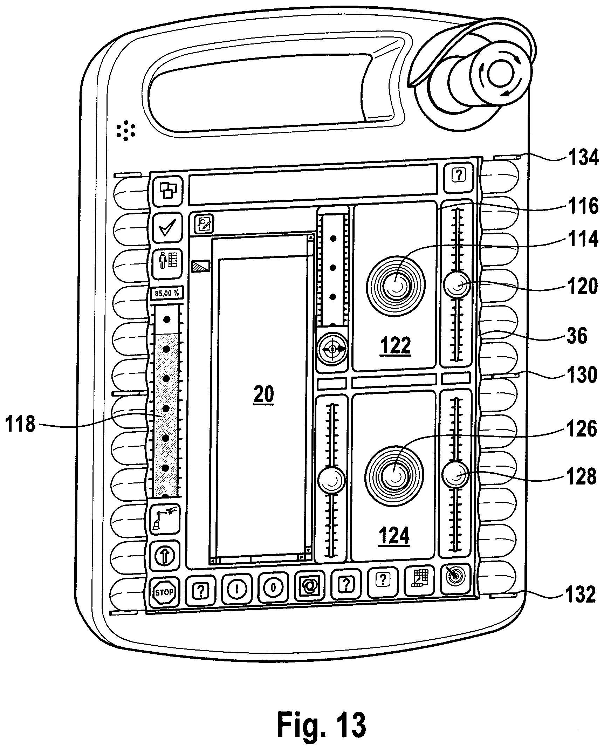

Nach dem Berühren einer in Fig. 13 dargestellten ausgewählten Verfahrfläche 114 als virtuelles Bedienelement kann der Finger anschließend auch über eine Begrenzung 116 über das gesamte Touch-Display 20 gezogen werden und so Fahrvorgaben erzeugen. Nach dem Loslassen bleibt der Industrieroboter 12 sofort stehen. Danach muss für eine erneute Verfahrvorgabe die gewünschte Fläche 114 wieder getroffen werden.

Die Sensibilität der Reaktion auf eine Fingerbewegung kann über ein virtuelles Bedienelement 118 wie Schiebe-Regler (z. B. Overnde-Regler) sowohl für die Positionsvorgabe als auch für die Geschwindigkeitsvorgabe stufenlos eingestellt werden.

Die sensitive Fläche 114 für das 2D-Verfahren ist in der Nähe des Displayrandes 36 platziert, so dass sie mit einem deutlichen Abstand zum Displayrand mit dem Finger (z. B. mit dem Daumen) noch gut erreicht werden kann.

Um auch in eine dritte Koordinatenrichtung (z. B. Z-Koordinate des kartesischen Koordinatensystems) verfahren zu können, wird ein virtuelles Bedienelement 120 in Form eines etwa fingerbreiten Feldes direkt seitlich am Displayrand 36 platziert, so dass dieses Feld mit dem Finger "ertastet" werden kann, indem der Finger, insbesondere der Daumen, entlang des Displayrandes 36 geführt wird. Dieses Feld erzeugt eine eindimensionale Verfahrvorgabe, z. B. in Z-Richtung.

Durch die spezielle Anordnung kann der Bediener die zwei Verfahrfelder 114, 120 deutlich unterscheiden und blind erreichen: Das Feld 120 direkt am Displayrand 36, wobei der Finger spürbaren Kontakt mit dem Gehäuserand hat, aktiviert die Verfahrvorgabe für die dritte Dimension (Z-Dimension). Das Feld 114, welches ca. einen Finger- oder Daumenbreit neben dem Displayrand 36 platziert ist, aktiviert die gleichzeitige Verfahrvorgabe in zwei Dimensionen (X-Y-Dimension).

Der Industrieroboter 12 besitzt 6 Freiheitsgrade. Für die Einstellung der Orientierung des Werkzeugs 112 mit den drei Winkeln (A, B, C) wird das gleiche Verfahren wie oben beschrieben verwendet. Dazu wird das Display in zwei Zonen 122, 124 aufgeteilt. In z. B. der oberen Zone 122 befinden sich die Verfahrfelder 114, 120 für die Dimensionen 1-3 (z. B. X, Y, Z). In z. B. der unteren Zone 124 befinden sich Verfahrfelder 126, 128 für die Dimensionen 4-6 z. B. A, B, C. Über die haptischen Marken in Form von Noppen 130, 132, 134 können die beiden Zonen 122, 124 blind unterschieden werden.

Mit einem Multitouch-Display 20 kann der Industrieroboter 12 so in allen 6 Freiheitsgraden simultan verfahren werden. Mit einem Singletouch-Display können die Verfahrfunktionen nur sequentiell verwendet werden.

Idealerweise ist der Industrieroboter 12 beim Verfahren mittels der zuvor erläuterten Touchmotion-Funktion kollinear zum Koordinatensystem des Touch-Displays 20 ausgerichtet. In diesem Fall stimmt die Roboterbewegung mit der Fingerbewegung auf dem Touch-Display optimal überein.

Dreht sich jedoch der Bediener mit dem Bediengerät 10 zur Seite weg, so ist diese Übereinstimmung nicht mehr gegeben. Die Bewegungsrichtung des Roboters stimmt dann nicht mehr mit der Bewegungsrichtung des Fingers überein.

Das Koordinatensystem des Touch-Displays muss in diesem Fall wieder zum Koordinatensystem des Roboters rekalibriert werden.

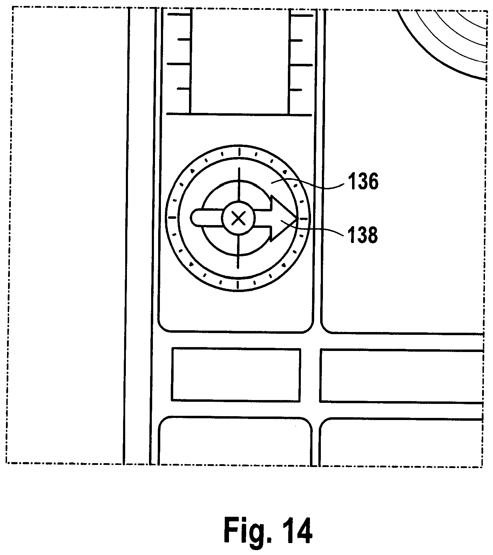

Erfindungsgemäß ist auf dem Touch-Display 20 gemäß Fig. 14 ein spezielles virtuelles Bedienelement 136 mit einem Zeiger 138 vorgesehen. Dieses Bedienelement 136 muss zunächst mit einem Finger angetippt werden und anschließend muss der Finger in die ausgewählte Richtung des Roboter-Koordinatensystems, z. B. X-Richtung, gezogen werden. Die X-Richtung ist in dem Arbeitsbereich des Roboters z. B. durch eine Markierung auf der Bodenfläche gekennzeichnet. Die Bewegung des Fingers auf dem Bedienelement 136 und damit die Ausrichtung des Zeigers 138 erfolgt parallel zu der im Arbeitsbereich des Roboters vorhandenen Markierung. Eine solche ist beispielhaft in Fig. 6 mit "200" gekennzeichnet. Nach dem Abheben des Fingers von dem Touch-Display 20 wird die Vektorrichtung zwischen dem ersten Berührungspunkt und dem Loslasspunkt berechnet. Mit Hilfe dieses Vektors, der ausgewählten Roboter-Koordinatenachse und einem gemeinsamen Z-Vektor wird eine Rotationsmatrix berechnet, über die fortan alle Fingerbewegungen transformiert werden, bevor sie als Verfahrvorgabe an den Roboter gegeben werden. Die Rekalibrierung erfolgt somit schnellstmöglich mit einer einzigen Geste. Nach der Rekalibrierung sind beide Koordinatensysteme wieder kollinear zueinander eingestellt, quasi eingenordet. Zur besseren Überprüfbarkeit wird die Richtung des kalibrierten Display-Koordinatensystems grafisch auf dem Touch-Display dargestellt.

Das Koordinatensystem für den Roboter ist in Fig. 6 eingezeichnet. Man erkennt, dass die Markierung 200 parallel zur X-Achse verläuft. Die Y-Achse verläuft in der Ebene der Standfläche des Roboters 12. Senkrecht hierzu verläuft die Z-Achse, um die der Roboter 12 drehbar ist (Pfeil A1).

In den Fig. 1 und 6 werden durch die Pfeile 1, 2, 3, 4, 5, 6 bzw. A1, A2, A3, A4, A5, A6 die Schwenk- bzw. Drehbewegungen des Roboters 12 bzw. des das Werkzeug 91 haltenden Arms gekennzeichnet. Somit kann im Ausführungsbeispiel der Roboter 12 in 6 Freiheitsgraden das Werkzeug 91 bewegen.

Diese erfindungsgemäße Kalibrierungsmethode, die ohne Sensorik arbeitet, kann auch für beliebige andere Koordinatensysteme, wie z. B. frei definierbare Frames, verwendet werden.

## Patentansprüche

1. Verfahren zur Bedienung eines mit einer Robotersteuerung (16) verbundenen Industrieroboters (12) mittels eines ein grafisches Bediener-Interface (18) wie Touch-Display (20) aufweisenden Bediengerätes (10), umfassend die Verfahrensschritte:
- Anfordern einer gewünschten Funktion oder Betriebsart des Industrieroboters (12) durch eine Betätigungs-Eingabe zumindest eines Bedienelementes (80, 82, 84; 96) durch einen Bediener,
- Erfassen der Betätigungs-Eingabe des zumindest einen Bedienelementes (80, 82, 84; 96), Übertragung der Betätigungs-Eingabe an ein sicheres Überwachungsgerät (78) zur Freigabe und/oder Überwachung der von dem Industrieroboter (12) auszuführenden Funktion oder Betriebsart,
- Identifizieren einer der angeforderten Funktion oder Betriebsart zugeordneten grafischen Information (88) in dem sicheren Überwachungsgerät (78),
- Codieren der grafischen Information (88, 90, 108) mittels einer einen Zufallsgenerator (100,107) aufweisenden Codiereinrichtung (99,105) und Übertragen der codierten grafischen Information (88, 90, 108) von dem sicheren Überwachungsgerät (78) an das Bediengerät (10) und Anzeige der codierten grafischen Information (88) auf dem grafischen Bediener-Interface (18),
- Erfassen einer Bestätigungs-Eingabe des Bedieners, durch die die Richtigkeit der angezeigten codierten grafischen Information (88, 90, 108) bestätigt wird,
- Rücksenden der Bestätigungs-Eingabe von dem Bediengerät (10) an das sichere Überwachungsgerät (78) und Vergleich der empfangenen Bestätigungs-Eingabe mit der übertragenen codierten grafischen Information, und
- Ausführen der angeforderten Funktion oder Betriebsart bei Übereinstimmung der Bestätigungs-Eingabe mit der übertragenen codierten grafischen Information.

2. Verfahren nach Anspruch 1,
**dadurch gekennzeichnet,**
**dass** der Vergleich der empfangenen Bestätigungs-Eingabe mit der übertragenen codierten grafischen Information eine Plausibilitätsprüfung umfasst.

3. Verfahren nach Anspruch 1 oder 2,
**dadurch gekennzeichnet,**
**dass** das zumindest eine Bedienelement (80, 82, 84) als virtuelles Bedienelement (80, 82, 84) auf einem Display (20) des grafischen Bediener-Interfaces (18) visuell dargestellt wird und dass bei Betätigung des virtuellen Bedienelementes (80, 82, 84) eine Position des virtuellen Bedienelementes (80, 82, 84) auf dem Display (20) in Form einer X'-, Y'-Koordinate erfasst wird.

4. Verfahren nach Anspruch 3,
**dadurch gekennzeichnet,**
**dass** die X'-, Y'-Koordinate an das sichere Überwachungsgerät (78) gesendet und in diesem ausgewertet wird.

5. Verfahren nach Anspruch 3,
**dadurch gekennzeichnet,**
**dass** die X'-, Y'-Koordinate in dem Bediengerät (10) ausgewertet wird, wobei eine der X'-, Y'-Koordinate entsprechende Funktion oder Betriebsart identifiziert wird, und dass eine Funktionskennung wie Funktionsname oder Funktionsnummer an das sichere Überwachungsgerät (78) gesendet wird.

6. Verfahren nach Anspruch 1,
**dadurch gekennzeichnet,**
**dass** als das zumindest eine Bedienelement (96) ein an dem sicheren Überwachungsgerät (78) angeschlossener Signalgeber (96) wie Schlüsselschalter, Taster verwendet wird.

7. Verfahren nach zumindest einem der vorhergehenden Ansprüche,
**dadurch gekennzeichnet,**
**dass** in einem sicheren Speicher (86) des sicheren Überwachungsgeräts (78) für jede Funktion oder Betriebsart ein entsprechendes Funktions-Ikon als grafische Information (88) gespeichert ist, dass jedem Funktions-Ikon (88) eine X'-,Y'-Koordinate oder eine Funktionskennung zugeordnet ist, dass das Funktions-Ikon (88) über die von dem Bediengerät empfangenen X'-, Y'-Koordinaten oder über das Signal des Signalgebers identifiziert wird und dass das Funktions-Ikon (88) von dem sicheren Überwachungsgerät (78) an das Bediengerät (10) übertragen und auf dem grafischen Bediener-Interface (18) angezeigt wird.

8. Verfahren nach zumindest einem der vorhergehenden Ansprüche,
**dadurch gekennzeichnet,**
**dass** das Funktions-Ikon (88) als Datei wie Bit-Map-Datei in dem sicheren Speicher (86) gespeichert ist und unverfälscht und ohne weitere Datenverarbeitung von dem sicheren Überwachungsgerät (78) an das Bediengerät (10) übertragen wird.

9. Verfahren nach zumindest einem der vorhergehenden Ansprüche,
**dadurch gekennzeichnet,**
**dass** das Funktions-Ikon (88) die angeforderte Funktion oder Betriebsart in grafischer Form als Bild und/oder Text darstellt.

10. Verfahren nach zumindest einem der vorhergehenden Ansprüche,
**dadurch gekennzeichnet,**
**dass** das sichere Überwachungsgerät (78) mittels eines Zufallsgenerators (100, 107) eine mindestens einstellige Zufallszahl (106) generiert und dass die Zufallszahl (106) abgespeichert wird.

11. Verfahren nach zumindest einem der vorhergehenden Ansprüche,
**dadurch gekennzeichnet,**
**dass** die Zufallszahl (106) ikonisiert und als Zahlencode in Form eines Zahlen-Ikons zusammen mit dem Funktions-Ikon (88) als codierte grafische Information (108, 88) dargestellt wird.

12. Verfahren nach zumindest einem der vorhergehenden Ansprüche,
**dadurch gekennzeichnet,**
**dass** die Bestätigungs-Eingabe des Bedieners die Eingabe einer durch den ikonisierten Zahlencode (108) vorgegebenen Ziffernfolge über eine Eingabeeinheit (110) wie Zifferntastatur des grafischen Bediener-Interfaces (18) umfasst, wobei die Eingabe der Ziffernfolge vorzugsweise durch Berühren von auf einem Touch-Display (20) angezeigten virtuellen Taster der Zifferntastatur erfasst wird.

13. Verfahren nach zumindest einem der vorhergehenden Ansprüche,
**dadurch gekennzeichnet,**
**dass** die eingegebene Ziffernfolge an das sichere Überwachungsgerät übertragen und mit der zuvor gespeicherten Zufallszahl (106) verglichen wird und dass bei Übereinstimmung der Zufallszahl mit der eingegebenen Ziffernfolge die angeforderte Funktion oder Betriebsart von dem sicheren Überwachungsgerät (78) ausgeführt wird.

14. Verfahren nach zumindest einem der vorhergehenden Ansprüche,
**dadurch gekennzeichnet,**
**dass** eine Zeitspanne t zwischen dem Aussenden des Zahlencodes (108) und dem Empfang der Ziffernfolge gemessen wird und dass dann, wenn die Zeitspanne t eine vordefinierte Zeitspanne tₘₐₓ überschreitet, der Bestätigungsvorgang abgebrochen wird.

15. Verfahren nach zumindest einem der vorhergehenden Ansprüche,
**dadurch gekennzeichnet,**
- **dass** das Codieren der grafischen Information (88) das Erzeugen eines Bildes (90) umfasst, in dem die grafische Information (88) an einer von dem sicheren Überwachungsgerät (78) bestimmten zufälligen Anzeige-Position positioniert ist,
- **dass** das Bild (90) an das Bediengerät (10) übertragen und zusammen mit der grafischen Information (88) auf dem Touch-Display (20) angezeigt wird,
- **dass** eine Berührungs-Position bei Berührung der angezeigten grafischen Information (88) durch den Bediener erfasst wird,
- **dass** die Berührungs-Position an die Sicherheitssteuerung (78) rückgesendet wird,
- **dass** die empfangene Berührungs-Position mit der vorgegebenen Anzeige-Position verglichen wird und
- **dass** die gewählte Funktion oder Betriebsart ausgeführt wird, wenn die Berührungs-Position mit der Anzeige-Position vorzugsweise innerhalb einer definierten Toleranz übereinstimmt.

16. Verfahren nach zumindest einem der vorhergehenden Ansprüche,
**dadurch gekennzeichnet,**
**dass** das Bild (90) in dem sicheren Speicher (86) des sicheren Überwachungsgerätes (78) mit leerem Bildinhalt in einem dem Datenformat des Funktions-Ikons (88) entsprechenden Datenformat abgespeichert ist und dass das Bild (90) mit leerem Bildinhalt als Bildrahmen (98) für die Darstellung des zumindest einen Funktions-Ikons (88) verwendet wird.

17. Verfahren nach zumindest einem der vorhergehenden Ansprüche,
**dadurch gekennzeichnet,**
**dass** das Funktions-Ikon (88) entsprechend der angewählten Funktion oder Betriebsart aus dem sicheren Speicher (86) entnommen und an eine zufällig gewählte U-/V-Position in das Bild (90) kopiert wird.

18. Verfahren nach zumindest einem der vorhergehenden Ansprüche,
**dadurch gekennzeichnet,**
**dass** die gewählte U-/V-Position durch den Zufallsgenerator (100) bestimmt wird und nur dem sicheren Überwachungsgerät (78) bekannt ist.

19. Verfahren nach zumindest einem der vorhergehenden Ansprüche,
**dadurch gekennzeichnet,**
**dass** das erzeugte Bild (90), d. h. Bildrahmen (98) mit Funktions-Ikon (88), als Ganzes an das Bediengerät (10) gesendet und auf dem Display (20) an einer definierten Position angezeigt wird.

20. Verfahren nach zumindest einem der vorhergehenden Ansprüche,
**dadurch gekennzeichnet,**
**dass** bei einer Bestätigung des in dem Bild (90) dargestellten Funktions-Ikons (88) die X-, Y-Koordinate des Auswahlpunktes erfasst und an das sichere Überwachungsgerät (78) gesendet wird und dass die X-, Y-Koordinate mit der U-/V-Position des Funktions-Ikons (88) in dem Bild (90) verglichen wird und dass dann, wenn die Koordinaten übereinstimmen, die angeforderte Funktion oder Betriebsart ausgeführt wird.

21. Verfahren nach zumindest einem der vorhergehenden Ansprüche,
**dadurch gekennzeichnet,**
**dass** eine Überprüfung dahingehend erfolgt, ob die X-Koordinate innerhalb eines Intervalls [U| U+ Ikon-Breite] liegt und ob die Y-Koordinate innerhalb eines Intervalls [V| V+ Ikon-Höhe] liegt und dass dann, wenn die X-, Y-Koordinaten innerhalb der Intervalle liegen, eine Bestätigungs-Eingabe vorliegt.

22. Verfahren nach zumindest einem der vorhergehenden Ansprüche,
**dadurch gekennzeichnet,**
**dass** die Betätigung des Funktions-Ikons (88) mit einer definierten Geste verknüpft ist, wobei nach Betätigung des Funktions-Ikons (88), d. h. bei gedrückter Maus-Taste bzw. bei anhaltender Fingerberührung des Touch-Displays (20) mit der Auswahleinrichtung wie Maus oder Finger eine Bewegung erfolgen muss, wie Ziehen in eine definierte Richtung, eine Linearbewegung oder Kreisbewegung.

23. Vorrichtung, die ein sicheres Überwachungsgerät (78) zur Freigabe und Überwachung einer von einem Industrieroboter (12) auszuführenden Funktion, eine den Industrieroboter (12) steuernde Steuereinrichtung (16) und ein Bediengerät (10) zur Anforderung der auszuführenden Funktion umfasst, wobei das sichere Überwachungsgerät (78) mit der Steuereinrichtung (16) und dem Bediengerät zum Austausch von Daten gekoppelt ist,
und wobei
das sichere Überwachungsgerät (78) umfasst:
- eine Auswerte- und Identifikationseinrichtung (94) zur Auswertung der Funktionsanforderung und Identifikation einer der Funktion entsprechenden grafischen Information (88),
- eine einen Zufallsgenerator (100,107) aufweisende Codiereinrichtung (99, 105) zur Codierung der grafischen Information (88),
- eine Übertragungseinrichtung zur Übertragung der codierten grafischen Information (88, 90, 108) an ein grafisches Benutzer-Interface (18) des Bediengerätes (10),
- eine Empfangs- und Vergleichseinrichtung (102) zum Empfang einer Bestätigungs-Eingabe von dem Bediengerät (10) und zum Vergleich der Bestätigungs-Eingabe mit der codierten grafischen Information (88, 90, 108).

24. Vorrichtung nach Anspruch 23,
**dadurch gekennzeichnet,**
**dass** das sichere Überwachungsgerät (78) einen sicheren, vorzugsweise zweikanaligen Speicher (86) aufweist, in dem die zumindest eine grafische Information (88) als Funktions-Ikon (88) gespeichert ist.

25. Vorrichtung nach Anspruch 23 oder 24,
**dadurch gekennzeichnet,**
**dass** die Codiereinrichtung (99) eine Bildgenerierungseinrichtung (101) aufweist, durch die das Funktions-Ikon (88) in ein in dem Speicher (86) gespeichertes Bild (90) mit leerem Bildinhalt an eine zufällige U-/V-Position kopiert wird.

26. Vorrichtung nach zumindest einem der Ansprüche 23 bis 25,
**dadurch gekennzeichnet,**
**dass** die Bildgenerierungseinrichtung (101) einen Zufallsgenerator (100) aufweist, mittels dem die U-/V-Position ermittelt wird.

27. Vorrichtung nach zumindest einem der Ansprüche 23 bis 25,
**dadurch gekennzeichnet,**
**dass** die Codiereinrichtung (99) mit der Vergleichseinrichtung (102) gekoppelt ist und/oder
**dass** die Codiereinrichtung (105) einen Zufallszahlengenerator (107) zur Erzeugung einer Zufallszahl (106) sowie eine Ikonisierungseinrichtung (109) zur Erzeugung eines Zahlen-Ikons (108) aufs der Zufallszahl (106) aufweist.

28. Vorrichtung nach zumindest einem der Ansprüche 23 bis 27,
**dadurch gekennzeichnet,**
**dass** die Vergleichseinrichtung (102) mit einem sicheren Ausgang zur Ausführung bzw. Freigabe der angeforderten Funktion gekoppelt ist.

29. Vorrichtung nach zumindest einem der Ansprüche 23 bis 28,
**dadurch gekennzeichnet,**
**dass** das sichere Überwachungsgerät (78) eine Zeitüberwachungseinrichtung (104) zur Überwachung einer Zeitspanne t vom Aussenden der codierten grafischen Information (88, 108) bis zum Empfang der Bestätigungs-Eingabe aufweist.

## Claims

1. A method for operating an industrial robot (12) connected to a robot control (16) by an operating device (10) comprising a graphic operator interface (18) such as a touch display (20), comprising the method steps:
- Requesting a desired function or operating mode of the industrial robot (12) by an activation input of at least one operating element (80, 82, 84; 96) by an operator,
- Registering the activation input of the at least one operating element (80, 82, 84; 96), transmission of the actuation input to a secure monitoring device (78) for enabling and/or monitoring the function to be carried out by the industrial robot (12) or the operating mode,
- Identifying graphic information (88) associated with the requested function or operating mode in the secure monitoring device (78),
- Coding the graphic information (88, 90, 108) by means of a coding device (99, 105) comprising a random generator (100, 107) and transmitting the coded graphic information (88, 90, 108) from the secure monitoring device (78) to the operating device (10) and the display of the coded graphic information (88) on the graphic operator interface (18),
- Registering an activation input of the operator by which the correctness of the displayed, coded graphic information (88, 90, 108) is confirmed,
- Return of the confirmation input from the operating device (10) to the secure monitoring device (78) and comparison of the received confirmation input with the transmitted, coded graphic information, and
- Carrying out the requested function or operating mode upon agreement of the confirmation input with the transmitted, coded, graphic information.

2. The method according to Claim 1,
**characterized in that**
the comparison of the received confirmation input with the transmitted, coded, graphic information comprises a plausibility check.

3. The method according to Claim 1 or 2,
**characterized in that**
the at least one operating element (80, 82, 84) is visually represented as a virtual operating element (80, 82, 84) on a display (20) of the graphic operator interface (18) and that upon activation of the virtual operating element (80, 82, 84) a position of the virtual operating element (80, 82, 84) is registered on the display (20) in the form of an X'-, Y'-coordinate.

4. The method according to Claim 3,
**characterized in that**
the X'-, Y'-coordinate is sent to the secure monitoring device (78) and evaluated in it.

5. The method according to Claim 3,
**characterized in that**
the X'-, Y'-coordinate is evaluated in the operating device (10), wherein a function or operating mode corresponding to the X'-, Y'-coordinate is identified and that a function recognition such as a function name or function number is transmitted to the secure monitoring device (78).

6. The method according to Claim 1,
**characterized in that**
a signal generator (96) such as a key switch or key connected to the secure monitoring device (78) is used as the at least one operating element (96).

7. The method according to at least one of the previous claims,
**characterized in that**
a corresponding function icon is stored as graphic information in a secure memory (86) of the secure monitoring device (78) for each function or operating mode, that an X'-, Y'-coordinate or a function identification is associated with each function icon (88), that the function icon (88) is identified by the X'-, Y'-coordinates received by the operating device or by the signal of the signal generator, and that the function icon (88) is transmitted from the secure monitoring device (78) to the operating device (10) and displayed on the graphical operating interface (18).

8. The method according to at least one of the previous claims,
**characterized in that**
the function icon (88) is stored as a file such as a bitmap file in the secure memory (86 and is transferred unfalsified and without further data processing from the secure monitoring device (78) to the operating device (10).

9. The method according to at least one of the previous claims,
**characterized in that**
the function icon (88) represents the requested function or operating mode in graphic form as image and/or text.

10. The method according to at least one of the previous claims,
**characterized in that**
the secure monitoring device (78) generates an at least single-digit random number (106) with a random generator (100, 107) and that the random number (106) is stored.

11. The method according to at least one of the previous claims,
**characterized in that**
the random number (106) is represented iconized and as a numeric code in the form of a numeric icon together with the function icon (88) as coded graphic information (108, 88).

12. The method according to at least one of the previous claims,
**characterized in that**
the confirmation input of the operator comprises the input of a numerical sequence given by the iconized numeric code (108) via an input unit (110) such as a numeric keyboard of the graphic operator interface (18), wherein the input of the numerical sequence is preferably registered by touching virtual keys of the numeric keyboard displayed on a touch display (20).

13. The method according to at least one of the previous claims,
**characterized in that**
the inputted numeric sequence is transmitted to the secure monitoring device and compared with the previously stored random number (106), and that upon agreement of the random number with the inputted numeric sequence the requested function or operating mode is executed by the secure monitoring device (78).

14. The method according to at least one of the previous claims,
**characterized in that**
a time span t between the sending of the numeric code (108) and the reception of the numeric sequence is measured, and that if the time span t exceeds a pre-defined time span tₘₐₓ the confirmation procedure is aborted.

15. The method according to at least one of the previous claims,
**characterized in that**
- The coding of the graphic information (88) comprises the generating of an image (90) in which the graphic information (88) is positioned on a random display position determined by the secure monitoring device (78),
- The image (90) is sent to the operating device (10) and displayed together with the graphic information (88) on the touch display (20),
- A touch position is registered when the displayed graphic information (88) is touched by the operator,
- The touch position is sent back to the security control (78),
- The received touch position is compared with the given display position, and
- The selected function or operating mode is executed if the touch position agrees with the display position, preferably within a defined tolerance.

16. The method according to at least one of the previous claims,
**characterized in that**
the image (90) in the secure memory (86) of the secure monitoring device (78) with empty image content is stored in a data format corresponding to the data format of the function icon (88) and that the image (90) with empty image content is used as an image frame (98) for representing the at least one function icon (88).

17. The method according to at least one of the previous claims,
**characterized in that**
the function icon (88) is removed from the secure memory (86) according to the selected function or operating mode and copied into the image (90) at a randomly selected U-/V-position.

18. The method according to at least one of the previous claims,
**characterized in that**
the selected U-/V-position is determined by the random generator (100) and is known only to the secure monitoring device (78).

19. The method according to at least one of the previous claims,
**characterized in that**
the generated image (90), i.e., the image frame (98) with function icon (88) is sent in its entirety to the operating device (10) and displayed on the display (20) at a defined position.

20. The method according to at least one of the previous claims,
**characterized in that**
upon a confirmation of the function icon (88) shown in the image (90) the X-, Y-coordinate of the selection point is registered and sent to the secure monitoring device (78) and that the X-, Y-coordinate is compared to the U-V position of the function icon (88) in the image (90) and that then, if the coordinates coincide, the requested function or operating mode is executed.

21. The method according to at least one of the previous claims,
**characterized in that**
a check is made to see whether the X coordinate is within an interval [U | U+ icon width] and whether the Y coordinate is within an interval [V | V+ icon height], and that if the X-, Y-coordinates are within the intervals, a confirmation input is present.

22. The method according to at least one of the previous claims,
**characterized in that**
the activation of the function icon (88) is linked to a defined gesture, wherein after the activation of the function icon (88), i.e., when the mouse key is pressed or when the finger contact on the touch display (20) is held down with the selection device such as mouse or finger a movement must take place such as dragging in a defined direction, a linear movement or a circular movement.

23. A device comprising a secure monitoring device (78) for the enabling and monitoring of a function to be performed by an industrial robot (12), a control device (16) controlling the industrial robot (12), and an operating device (10) for requesting the function to be performed, wherein the secure monitoring device (78) is coupled to the control device (16) and the operating device for the exchange of data, and wherein
the secure monitoring device (78) comprises:
- An evaluation and identification device (94) for evaluating the requesting of functions and the identification of graphic information (88) corresponding to the function,
- A coding device (99, 105) comprising a random generator (100, 107) for coding the graphic information (88),
- A transmission device for transmitting the coded, graphic information (88, 90, 108) to a graphical user interface (18) of the operating device (10),
- A receiving and comparing device (102) for receiving a confirmation input from the operating device (10) and for comparing the confirmation input with the coded graphic information (88, 90, 108).

24. The device according to Claim 23,
**characterized in that**
the secure monitoring device (78) comprises a secure, preferably two-channel memory (86) in which the at least one piece of graphic information (88) is stored as a function icon (88).

25. The device according to Claim 23 or 24,
**characterized in that**
the coding device (99) comprises an image generating device (101) with which the function icon (88) is copied into an image (90) with empty image content stored in the memory (86) at a random U-/V position.

26. The device according to at least one of Claims 23 to 25,
**characterized in that**
the image generating device (101) comprises a random generator (100) with which the U-/V position is generated.

27. The device according to at least one of Claims 23 to 25,
**characterized in that**
the coding device (99) is coupled to the comparison device (102) and/or that the coding device (105) comprises a random number generator (107) for generating a random number (106) and comprises an iconizing device (109) for generating a numeric icon (108) for the random number (106).

28. The device according to at least one of Claims 23 to 27,
**characterized in that**
the comparison device (102) is coupled to a secure output for carrying out or enabling the requested function.

29. The device according to at least one of Claims 23 to 28,
**characterized in that**
the secure monitoring device (78) comprises a time monitoring device (104) for monitoring a time span t from the sending of the coded graphic information (88, 108) to the reception of the confirmation input.

## Revendications

1. Procédé de commande d'un robot industriel (12) relié à une commande de robot (16) au moyen d'un appareil de commande (10) présentant une interface utilisateur graphique (18) telle qu'un écran tactile (20), ledit procédé comprenant les étapes suivantes :
- appel d'une fonction ou d'un mode de service souhaité(e) du robot industriel (12) par demande d'actionnement par un opérateur d'au moins un élément de commande (80, 82, 84; 96),
- saisie de la demande d'actionnement de l'au moins un élément de commande (80, 82, 84; 96), transmission de la demande d'actionnement à un appareil de surveillance sûr (78) pour qu'il autorise et/ou surveille la fonction ou le mode de service que doit exécuter le robot industriel (12),
- identification d'une information graphique (88) associée à la fonction ou au mode de service souhaité(e) dans l'appareil de surveillance sûr (78),
- codage de l'information graphique (88, 90, 108) au moyen d'un codeur (99, 105) présentant un générateur de nombres aléatoires (100, 107), transfert de l'information graphique (88, 90, 108) codée de l'appareil de surveillance sûr (78) à l'appareil de commande (10) et affichage de l'information graphique (88) codée sur l'interface utilisateur graphique (18),
- saisie d'une demande de validation de l'opérateur, par laquelle l'exactitude de l'information graphique (88, 90, 108) codée affichée sera confirmée,
- renvoi de la demande de validation de l'appareil de commande (10) à l'appareil de surveillance sûr (78) et comparaison de la demande de validation reçue avec l'information graphique codée transférée, et
- exécution de la fonction ou du mode de service demandé(e) en cas de concordance de la demande de validation avec l'information graphique codée transférée.

2. Procédé selon la revendication 1,
**caractérisé en ce**
**que** la comparaison de la demande de validation reçue avec l'information graphique codée transférée comprend un contrôle de vraisemblance.

3. Procédé selon la revendication 1 ou 2,
**caractérisé en ce**
**que** l'au moins un élément de commande (80, 82, 84) est représenté visuellement en tant qu'élément de commande virtuel (80, 82, 84) sur un écran (20) de l'interface utilisateur graphique (18), et qu'en cas d'actionnement de l'élément de commande virtuel (80, 82, 84) est saisie une position de l'élément de commande virtuel (80, 82, 84) sur l'écran (20) sous forme de coordonnées X', Y'.

4. Procédé selon la revendication 3,
**caractérisé en ce**
**que** les coordonnées X', Y' sont envoyées à l'appareil de surveillance sûr (78) et analysées dans ledit appareil.

5. Procédé selon la revendication 3,
**caractérisé en ce**
**que** les coordonnées X', Y' sont analysées dans l'appareil de commande (10), sachant qu'une fonction ou un mode de service correspondant aux coordonnées X', Y' est identifié(e), et qu'un identifiant de fonction, tel qu'un nom de fonction ou un numéro de fonction est envoyé à l'appareil de surveillance sûr (78).

6. Procédé selon la revendication 1,
**caractérisé en ce**
**qu'**en tant que l'au moins un élément de commande (96) est utilisé un transmetteur de signaux (96), tel qu'un bouton à clé, un bouton de touche, connecté à l'appareil de surveillance sûr (78).

7. Procédé selon au moins une des revendications précédentes,
**caractérisé en ce**
**que** pour chaque fonction ou mode de service, une icône de fonction correspondante est enregistrée sous forme d'information graphique (88) dans une mémoire sûre (86) de l'appareil de surveillance sûr (78), qu'à chaque icône de fonction (88) est/sont associé(es) des coordonnées X', Y' ou un identifiant de fonction, que l'icône de fonction (88) est identifiée au moyen des coordonnées X', Y' reçues par l'appareil de commande ou au moyen du signal du transmetteur de signaux, et que l'icône de fonction (88) est transférée de l'appareil de surveillance sûr (78) à l'appareil de commande (10) et affichée sur l'interface utilisateur graphique (18).

8. Procédé selon au moins une des revendications précédentes,
**caractérisé en ce**
**que** l'icône de fonction (88) est enregistrée sous forme de fichier, tel que fichier bitmap, dans la mémoire sûre (86) et transmis tel quel et sans autre traitement de données depuis l'appareil de surveillance sûr (78) à l'appareil de commande (10).

9. Procédé selon au moins une des revendications précédentes,
**caractérisé en ce**
**que** l'icône de fonction (88) représente la fonction ou le mode de service demandé(e) sous forme graphique en tant qu'image et/ou texte.

10. Procédé selon au moins une des revendications précédentes,
**caractérisé en ce**
**que** l'appareil de surveillance sûr (78) génère au moyen d'un générateur de nombres aléatoires (100, 107) un nombre aléatoire (106) d'au moins un chiffre, et que le nombre aléatoire (106) est enregistré.

11. Procédé selon au moins une des revendications précédentes,
**caractérisé en ce**
**que** le nombre aléatoire (106) est iconisé et représenté en tant que code numérique sous la forme d'une icône numérique avec l'icône de fonction (88) en tant qu'information graphique (108, 88) codée.

12. Procédé selon au moins une des revendications précédentes,
**caractérisé en ce**
**que** la demande de validation de l'opérateurs comprend l'entrée d'une suite de chiffres, prédéfinie par le code numérique (108) iconisé, via une unité d'entrée (110), telle qu'un pavé numérique, de l'interface utilisateur graphique (18), sachant que l'entrée de la suite de chiffres est saisie de préférence en touchant des boutons de touche virtuels du pavé numérique affichées sur un écran tactile (20).

13. Procédé selon au moins une des revendications précédentes,
**caractérisé en ce**
**que** la suite de chiffres entrée est transmise à l'appareil de surveillance sûr et comparée avec le nombre aléatoire (106) enregistré auparavant, et qu'en cas de concordance du nombre aléatoire avec la suite de chiffres entrée, la fonction ou le mode de service demandé(e) est exécuté(e) par l'appareil de surveillance sûr (78).

14. Procédé selon au moins une des revendications précédentes,
**caractérisé en ce**
**qu'**un laps de temps t est mesuré entre l'envoi du code numérique (108) et la réception de la suite de chiffres et que si le laps de temps t dépasse un laps de temps tₘₐₓ prédéfini, la procédure de validation est interrompue.

15. Procédé selon au moins une des revendications précédentes,
**caractérisé en ce**
- **que** le codage de l'information graphique (88) comprend la création d'une image (90) dans laquelle l'information graphique (88) est positionnée sur une position d'affichage aléatoire déterminée par l'appareil de surveillance sûr (78),
- **que** l'image (90) est transmise à l'appareil de commande (10) et affichée avec l'information graphique (88) sur l'écran tactile (20),
- **qu'**une position de contact est saisie lorsque l'opérateur touche l'information graphique (88) affichée,
- **que** la position de contact est renvoyée à la commande de sécurité (78),
- **que** la position de contact reçue est comparée avec la position d'affichage prédéfinie et
- **que** la fonction ou le mode de service sélectionné(e) est exécuté(e) si la position de contact concorde avec la position d'affichage, de préférence à l'intérieur d'une plage de tolérance définie.

16. Procédé selon au moins une des revendications précédentes,
**caractérisé en ce**
**que** l'image (90) est stockée dans la mémoire sûre (86) de l'appareil de surveillance sûre (78), avec contenu d'image vide dans un format de données correspondant au format de données de l'icône de fonction (88) et que l'image (90) au contenu d'image vide est utilisée en tant que cadre d'image (98) pour la représentation de l'au moins une icône de fonction (88).

17. Procédé selon au moins une des revendications précédentes,
**caractérisé en ce**
**que** l'icône de fonction (88) correspondant à la fonction ou au mode de service sélectionné(e) est extraite de la mémoire sûre (86) et copiée dans l'image (90) sur une position U/V choisie de manière aléatoire.

18. Procédé selon au moins une des revendications précédentes,
**caractérisé en ce**
**que** la position U/V choisie est déterminée par le générateur de nombres aléatoires (100) et n'est connue que par l'appareil de surveillance sûr (78).

19. Procédé selon au moins une des revendications précédentes,
**caractérisé en ce**
**que** l'image (90) créée, c'est-à-dire le cadre d'image (98) avec icône de fonction (88), est envoyée dans son ensemble à l'appareil de commande (10) et affichée sur l'écran (20) à une position définie.

20. Procédé selon au moins une des revendications précédentes,
**caractérisé en ce**
**que** lors d'une validation de l'icône de fonction (88) représentée dans l'image (90), les coordonnées X, Y du point de sélection sont saisies et envoyées à l'appareil de surveillance sûr (78), que les coordonnées X, Y sont comparées avec la position U/V de l'icône de fonction (88) dans l'image (90), et que si les coordonnées concordent, la fonction ou le mode de service demandé(e) est exécuté(e).

21. Procédé selon au moins une des revendications précédentes,
**caractérisé en ce**
**qu'**il est vérifié si la coordonnée X se situe à l'intérieur d'un intervalle [U | U+ largeur d'icône] et si la coordonnée Y se situe à l'intérieur d'un intervalle [V | V+ hauteur d'icône], et que quand les coordonnées X, Y se situent à l'intérieur des intervalles, un demande de validation est présente.

22. Procédé selon au moins une des revendications précédentes,
**caractérisé en ce**
**que** l'actionnement de l'icône de fonction (88) est associé à un geste défini, à savoir qu'après actionnement de l'icône de fonction (88), c'est-à-dire en présence d'une touche de souris pressée ou d'un effleurement digital prolongé sur l'écran tactile (20) avec le dispositif de sélection tel que souris ou doigt, un mouvement tel que traçage dans une direction définie, mouvement linéaire ou mouvement circulaire doit être effectué.

23. Dispositif comprenant un appareil de surveillance sûr (78) pour valider et surveiller une fonction devant être exécutée par un robot industriel (12), un dispositif de commande (16) pilotant le robot industriel (12) et un appareil de commande (10) pour demander la fonction à exécuter, sachant que l'appareil de surveillance sûr (78) est couplé au dispositif de commande (16) et à l'appareil de commande afin d'échanger des données, et que l'appareil de surveillance sûr (78) comprend :
- un dispositif d'analyse et d'identification (94) pour analyser la demande de fonction et identifier une information graphique (88) correspondant à la fonction,
- un codeur (99, 105) présentant un générateur de nombres aléatoires (100, 107) pour coder l'information graphique (88),
- un dispositif de transmission pour transmettre l'information graphique codée (88, 90, 108) à une interface utilisateur graphique (18) de l'appareil de commande (10),
- un dispositif récepteur et comparateur (102) pour recevoir une demande de validation de l'appareil de commande (10) et pour comparer la demande de validation avec l'information graphique codée (88, 90, 108).

24. Dispositif selon la revendication 23,
**caractérisé en ce**
**que** l'appareil de surveillance sûr (78) présente une mémoire (86) sûre, de préférence à deux voies, dans laquelle l'au moins une information graphique (88) est stockée sous forme d'icône de fonction (88).

25. Dispositif selon la revendication 23 ou 24,
**caractérisé en ce**
**que** le codeur (99) présente un dispositif de génération d'images (101), au moyen duquel l'icône de fonction (88) est copiée sur une position U/V aléatoire dans une image (90) à contenu d'image vide stockée dans la mémoire (86).

26. Dispositif selon au moins une des revendications 23 à 25,
**caractérisé en ce**
**que** le dispositif de génération d'images (101) présente un générateur de nombres aléatoires (100) au moyen duquel est déterminée la position U/V.

27. Dispositif selon au moins une des revendications 23 à 25,
**caractérisé en ce**
**que** le codeur (99) est couplé au dispositif comparateur (102) et/ou que le codeur (105) présente un générateur de nombres aléatoires (107) pour générer un nombre aléatoire (106) ainsi qu'un dispositif d'iconisation (109) pour créer une icône numérique (108) sur le nombre aléatoire (106).

28. Dispositif selon au moins une des revendications 23 à 27,
**caractérisé en ce**
**que** le dispositif comparateur (102) est couplé à une sortie sûre pour exécuter et/ou autoriser la fonction demandée.

29. Dispositif selon au moins une des revendications 23 à 28,
**caractérisé en ce**
**que** l'appareil de surveillance sûr (78) présente un dispositif de surveillance de temps (104) pour surveiller un laps de temps t s'écoulant entre l'envoi de l'information graphique codée (88, 108) et la réception de demande de validation.
